(19) Europäisches Patentamt
European Patent Office
Office européen des brevets

(11) **EP 4 657 789 A1**

(12) **EUROPEAN PATENT APPLICATION**
published in accordance with Art. 153(4) EPC

(43) Date of publication:
**03.12.2025 Bulletin 2025/49**

(21) Application number: **24752919.1**

(22) Date of filing: **08.02.2024**

(51) International Patent Classification (IPC):
**H04L 5/00** (2006.01)

(52) Cooperative Patent Classification (CPC):
**H04L 5/00; H04L 27/26**

(86) International application number:
**PCT/CN2024/076870**

(87) International publication number:
**WO 2024/165065 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2023 CN 202310154340**

(71) Applicant: **Huawei Technologies Co., Ltd.
Shenzhen, Guangdong 518129 (CN)**

(72) Inventors:
• **HU, Mengshi**
 **Shenzhen, Guangdong 518129 (CN)**
• **YU, Jian**
 **Shenzhen, Guangdong 518129 (CN)**
• **GAN, Ming**
 **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, AND APPARATUS**

(57) This application provides a communication method and apparatus, to provide a solution for determining transmission duration of a PPDU when the PPDU is transmitted between a first apparatus and a second apparatus. The method includes: The first apparatus generates a PPDU, where the first PPDU includes a data field, a TRN field, and at least one PE field, the first PPDU further includes first indication information, and the first indication information represents transmission duration of a part or all of fields in the first PPDU; and the first apparatus sends the first PPDU to the second apparatus. The second apparatus may determine total transmission duration of the first PPDU based on the first indication information, or may further determine transmission duration of a part or all of fields in the first PPDU, to accurately receive the first PPDU.

First apparatus

Second apparatus

Step 501: Generate a first PPDU

Step 502: Send the first PPDU

Step 503: Determine transmission duration of a part or all of fields in the first PPDU based on first indication information

FIG. 5

**Description**

CROSS-REFERENCE TO RELATED APPLICATIONS

This application claims priority to Chinese Patent Application No. 202310154340.9, filed with the China National Intellectual Property Administration on February 9, 2023 and entitled "COMMUNICATION METHOD AND APPARATUS", which is incorporated herein by reference in its entirety.

TECHNICAL FIELD

This application relates to the field of wireless communication technologies, and in particular, to a communication method and apparatus.

BACKGROUND

In a communication process of a wireless local area network (wireless local area network, WLAN), data transmission may be implemented between a transmit end and a receive end by transmitting a physical layer protocol data unit (physical layer protocol data unit, PPDU). For example, the transmit end may be an access point (access point, AP), and the receive end may be a station (station, STA).

The PPDU transmitted between the transmit end and the receive end includes a preamble and a plurality of fields. When receiving the PPDU transmitted by the transmit end, the receive end needs to accurately receive the PPDU based on transmission duration of the PPDU. Therefore, currently a solution for determining the transmission duration of the PPDU is urgently needed.

SUMMARY

This application provides a communication method and apparatus, to provide a solution for determining transmission duration of a PPDU when the PPDU is transmitted between a first apparatus and a second apparatus.

According to a first aspect, a communication method is provided. The method may be applied to a first apparatus, a functional module in the first apparatus, a processor, a chip, or the like in the first apparatus. For example, the method is applied to the first apparatus. The method may include the following: The first apparatus generates a PPDU, where the first PPDU includes a data field, a training TRN field, and at least one packet extension PE field; the TRN field is located after the data field, and the PE field is located between the data field and the TRN field, or the PE field is located after the TRN field; and the first PPDU further includes first indication information, and the first indication information represents transmission duration of a part or all of fields in the first PPDU; and the first apparatus sends the first PPDU to a second apparatus.

According to the foregoing method, the first PPDU generated by the first apparatus includes the data field, the TRN field, and the at least one PE field. In a high-frequency communication scenario, the first apparatus and the second apparatus may perform beam training based on the TRN field in the first PPDU. This helps the first apparatus and the second apparatus accurately perform directional transmission. Because the first PPDU sent by the first apparatus includes the PE field, more processing time can be provided for the second apparatus, to ensure correct receiving of transmission data in the first PPDU. In addition, the first apparatus indicates the transmission duration of the part or all of fields in the first PPDU to the second apparatus by adding the first indication information to the first PPDU, so that the second apparatus can determine the total transmission duration of the first PPDU based on the first indication information, or determine the transmission duration of the part or all of fields in the first PPDU, and the second apparatus can accurately receive the first PPDU based on the total transmission duration of the first PPDU or the transmission duration of the part or all of fields in the first PPDU.

In a possible design, the first apparatus sends the first PPDU to the second apparatus on a target transmission resource, where a frequency of the target transmission resource is greater than a first threshold.

According to the foregoing method, because the frequency of the target transmission resource used by the first apparatus to send the first PPDU to the second apparatus may be greater than the first threshold, it may indicate that the first apparatus and the second apparatus transmit the first PPDU in a high-frequency communication scenario. Because a signal attenuation degree is large in the high-frequency communication scenario, the first apparatus and the second apparatus may perform beam training based on the TRN field in the first PPDU, to improve reliability of information transmission between the first apparatus and the second apparatus.

In a possible design, the first indication information includes first length information, the first length information represents a first length, and the first length includes at least lengths of the data field, the TRN field, and the PE field; or the first length information represents total transmission duration including at least the data field, the TRN field, and the PE field.

According to the foregoing method, the first apparatus adds the first length information to the first indication information, where the first length information represents a total length including at least the data field, the TRN field, and the PE field, or represents the total transmission duration including at least the data field, the TRN field, and the PE field. Therefore, the second apparatus can determine the total transmission duration of the first PPDU based on the first length information, and accurately receive the first PPDU based on the total transmission duration of the first PPDU.

In a possible design, the first indication information further includes a first parameter corresponding to the TRN field and a second parameter corresponding to the PE field. The first parameter represents transmission duration of the TRN field, and the second parameter represents transmission duration of the PE field.

According to the foregoing method, because the length or the duration represented by the first length information includes at least the data field, the TRN field, and the PE field, when the first indication information further includes the first parameter corresponding to the TRN field and the second parameter corresponding to the PE field, the second apparatus can determine transmission duration of the data field based on the first length information, the first parameter, and the second parameter, and separately determine the transmission duration of the TRN field and the transmission duration of the PE field based on the first parameter and the second parameter. In this way, the second apparatus can obtain the transmission duration of each field in the first PPDU, to accurately receive the first PPDU.

In a possible design, the first indication information further includes a third parameter corresponding to the data field and a second parameter corresponding to the PE field. The third parameter represents transmission duration of the data field, and the second parameter represents transmission duration of the PE field.

According to the foregoing method, because the length or the duration represented by the first length information includes at least the data field, the TRN field, and the PE field, when the first indication information further includes the third parameter corresponding to the data field and the second parameter corresponding to the PE field, the second apparatus can determine transmission duration of the TRN field based on the first length information, the second parameter, and the third parameter, and separately determine the transmission duration of the PE field and the transmission duration of the data field based on the second parameter and the third parameter. In this way, the second apparatus can obtain the transmission duration of each field in the first PPDU, to accurately receive the first PPDU.

In a possible design, the first indication information includes second length information. The second length information represents a length of a PSDU in the first PPDU, or the second length information represents transmission duration of a PSDU in the first PPDU.

According to the foregoing method, because the length or the transmission duration of the PSDU in the first PPDU may reflect a length or the transmission duration of the data field in the first PPDU, the second apparatus may determine the transmission duration of the data field in the first PPDU based on the second length information included in the first indication information, to accurately receive data content carried in the data field.

In a possible design, the first parameter corresponding to the TRN field or the second parameter corresponding to the PE field may be configured in the following manner: being carried in the first indication information, or being predefined, or being carried in second indication information of a second PPDU. The second PPDU is transmitted by the first apparatus to the second apparatus before the first PPDU is transmitted, the first parameter represents transmission duration of the TRN field, and the second parameter represents transmission duration of the PE field.

According to the foregoing method, a plurality of different manners of configuring the first parameter corresponding to the TRN field and the second parameter corresponding to the PE field are provided. The first apparatus and the second apparatus may configure the first parameter in any one of the foregoing manners, or configure the second parameter in any one of the foregoing manners. A plurality of manners of flexibly configuring the first parameter and the second parameter are provided. In addition, the second apparatus may determine the transmission duration of each field in the first PPDU and the total transmission duration of the first PPDU based on the configured first parameter, the configured second parameter, and the second length information, to accurately receive the first PPDU.

In a possible design, the first indication information includes a first parameter corresponding to the TRN field, a second parameter corresponding to the PE field, and a third parameter corresponding to the data field. The first parameter represents transmission duration of the TRN field, the second parameter represents transmission duration of the PE field, and the third parameter represents transmission duration of the data field. Alternatively, the first indication information includes first duration, the first duration represents total transmission duration corresponding to a field after a field in which the first indication information is located in the first PPDU, and the total transmission duration includes at least duration corresponding to the data field and a part or all of fields after the data field.

According to the foregoing method, in an implementation, the first apparatus directly adds, to the first indication information, a parameter that corresponds to each field and that represents duration, so that the second apparatus can determine the transmission duration of the data field, the TRN field, and the PE field based on each parameter. In another implementation, the first apparatus directly adds the first duration to the first indication information, and the first duration represents the total duration corresponding to at least the data field and the part or all of fields after the data field, so that the second apparatus can determine the total transmission duration of the first PPDU based on the first duration.

In a possible design, the first parameter is the transmission duration of the TRN field; or the first parameter is a quantity of TRN units included in the TRN field and/or transmission duration of each TRN unit.

According to the foregoing method, a plurality of possible types of the first parameter are provided. When the first parameter is the transmission duration of the TRN field, the second apparatus may directly determine the transmission duration of the TRN field based on the first parameter. When the first parameter is the quantity of TRN units included in the TRN field and/or the transmission duration of each TRN unit, the second apparatus may determine the transmission duration of the TRN field based on the quantity of TRN units included in the TRN field and/or the transmission duration of each TRN unit.

In a possible design, the second parameter is the transmission duration of the PE field, or the second parameter is disambiguation indication information, or the second parameter is M, where M represents a multiple of transmission duration of a preset time unit.

According to the foregoing method, a plurality of possible types of the second parameter are provided. When the second parameter is the transmission duration of the PE field, the second apparatus may directly determine the transmission duration of the PE field based on the second parameter. When the second parameter is the disambiguation indication information or M, the second apparatus may indirectly determine the transmission duration of the PE field.

In a possible design, the third parameter is the transmission duration of the data field; or the third parameter is a quantity of OFDM symbols occupied by the data field and/or transmission duration corresponding to each OFDM symbol.

According to the foregoing method, a plurality of possible types of the third parameter are provided. When the third parameter is the transmission duration of the data field, the second apparatus may directly determine the transmission duration of the data field based on the third parameter. When the third parameter is the quantity of OFDM symbols occupied by the data field and/or the transmission duration corresponding to each OFDM symbol, the second apparatus may determine the transmission duration of the PE field based on the quantity of OFDM symbols occupied by the data field and/or the transmission duration corresponding to each OFDM symbol.

In a possible design, the first PPDU further includes a preamble, the preamble includes a signaling field, and the signaling field carries the first indication information.

According to the foregoing method, the preamble of the first PPDU sent by the first apparatus may carry the first indication information. Because the preamble is located in the front of the first indication information, the second apparatus may parse out the first indication information from the preamble, and determine the total transmission duration of the first PPDU, and/or the transmission duration of each field in the first PPDU. In this way, receiving of the first PPDU is not affected.

In a possible design, the preamble includes third indication information, and the third indication information represents a format of the first PPDU.

According to the foregoing method, because the format of the first PPDU includes a high-frequency format and a low-frequency format, after receiving the first PPDU, the second apparatus may determine the format of the first PPDU based on the third indication information included in the preamble of the first PPDU.

According to a second aspect, this application provides a communication method. The method may be applied to a second apparatus, a functional module in the second apparatus, a processor, a chip, or the like in the second apparatus. For example, the method is applied to the second apparatus. The method may include: The second apparatus receives a first PPDU sent by a first apparatus, where the first PPDU includes a data field, a TRN field, and at least one PE field; the TRN field is located after the data field, and the PE field is located between the data field and the TRN field, or the PE field is located after the TRN field; the first PPDU further includes first indication information; and the second apparatus determines transmission duration of a part or all of fields in the first PPDU based on the first indication information.

In a possible design, the second apparatus receives the first PPDU sent by the first apparatus on a target transmission resource, where a frequency of the target transmission resource is greater than a first threshold.

In a possible design, the first indication information includes first length information, the first length information represents a first length, and the first length includes at least lengths of the data field, the TRN field, and the PE field; or the first length information represents total transmission duration including at least the data field, the TRN field, and the PE field.

In a possible design, the first indication information further includes a first parameter corresponding to the TRN field and a second parameter corresponding to the PE field. The first parameter represents transmission duration of the TRN field, and the second parameter represents transmission duration of the PE field.

In a possible design, the first indication information further includes a third parameter corresponding to the data field and a second parameter corresponding to the PE field. The third parameter represents transmission duration of the data field, and the second parameter represents transmission duration of the PE field.

In a possible design, the first indication information includes second length information. The second length information represents a length of a PSDU in the first PPDU, or the second length information represents transmission duration of a PSDU in the first PPDU.

In a possible design, the first parameter corresponding to the TRN field or the second parameter corresponding to the PE field may be configured in the following manner: being carried in the first indication information, or being predefined, or being carried in second indication information of a second PPDU. The second PPDU is transmitted by the first apparatus to the second apparatus before the first PPDU is transmitted, the first parameter represents transmission duration of the TRN field, and the second parameter represents transmission duration of the PE field.

In a possible design, the first indication information includes a first parameter corresponding to the TRN field, a second parameter corresponding to the PE field, and a third parameter corresponding to the data field. The first parameter represents transmission duration of the TRN field, the second parameter represents transmission duration of the PE field, and the third parameter represents transmission duration of the data field. Alternatively, the first indication information includes first duration, the first duration represents total transmission duration corresponding to a field after a field in which the first indication information is located in the first PPDU, and the total transmission duration includes at least duration corresponding to the data field and a part or all of fields after the data field.

In a possible design, the first parameter is the transmission duration of the TRN field; or the first parameter is a quantity of TRN units included in the TRN field and/or transmission duration of each TRN unit.

In a possible design, the second parameter is the transmission duration of the PE field, or the second parameter is disambiguation indication information, or the second parameter is M, where M represents a multiple of transmission duration of a preset time unit.

In a possible design, the third parameter is the transmission duration of the data field; or the third parameter is a quantity of OFDM symbols occupied by the data field and/or transmission duration corresponding to each OFDM symbol.

In a possible design, the first PPDU further includes a preamble, the preamble includes a signaling field, and the signaling field carries the first indication information.

In a possible design, the preamble includes third indication information, and the third indication information represents a format of the first PPDU.

In a possible design, the second apparatus determines a format of the first PPDU based on a frequency of a transmission resource for transmitting the first PPDU by the first apparatus.

According to a third aspect, this application further provides a communication apparatus. The communication apparatus has a function of implementing the method according to the first aspect or any one of the possible designs of the first aspect. The communication apparatus may be implemented by using hardware, or may be implemented by using hardware executing corresponding software. The hardware or the software includes one or more units or modules corresponding to the foregoing function.

In a possible design, the communication apparatus includes a processor. The processor is configured to support the communication apparatus in performing a corresponding function of the first apparatus in the foregoing method. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device like a second apparatus. The interface circuit may alternatively be a transceiver. The transceiver may include a transmitter and a receiver. The transmitter and the receiver may be different components, or may be a same component but can implement different functions.

In a possible design, the communication apparatus includes corresponding functional modules, separately configured to implement the steps in the foregoing method. The function may be implemented by using hardware, or may be implemented by using hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect or the third aspect. Details are not described herein again. The communication unit (or the communication module) may alternatively be a transceiver unit (or a transceiver module). The transceiver unit may include a sending unit and a receiving unit. The sending unit and the receiving unit may be different units, or may be a same unit but can implement different functions.

The communication apparatus may be a first apparatus or a chip or a chip system in the first apparatus. If the communication apparatus is the first apparatus, the transceiver may be a radio frequency transceiver component in the first apparatus. If the communication apparatus is the chip or the chip system disposed in the first apparatus, the transceiver may be a communication interface in the chip or the chip system. The communication interface is connected to the radio frequency transceiver component in the first apparatus, to implement information receiving and sending through the radio frequency transceiver component.

According to a fourth aspect, this application further provides a communication apparatus. The communication apparatus has a function of implementing the method according to the first aspect or any one of the possible designs of the first aspect. The communication apparatus may be implemented by using hardware, or may be implemented by using hardware executing corresponding software. The hardware or the software includes one or more units or modules corresponding to the foregoing function.

In a possible design, the communication apparatus includes a processor. The processor is configured to support the communication apparatus in performing a corresponding function of the second apparatus in the foregoing method. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device like a first apparatus. The interface circuit may alternatively be a transceiver. The transceiver may include a transmitter and a receiver. The transmitter and the receiver may be different components, or may be a same component but can implement different functions.

In a possible design, the communication apparatus includes corresponding functional modules, separately configured to implement the steps in the foregoing method. The function may be implemented by using hardware, or may be implemented by using hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect or the third aspect. Details are not described herein again. The communication unit (or the communication module) may alternatively be a transceiver unit (or a transceiver module). The transceiver unit may include a sending unit and a receiving unit. The sending unit and the receiving unit may be different units, or may be a same unit but can implement different functions.

The communication apparatus may be a second apparatus or a chip or a chip system in the second apparatus. If the communication apparatus is the second apparatus, the transceiver may be a radio frequency transceiver component in the second apparatus. If the communication apparatus is the chip or the chip system disposed in the second apparatus, the transceiver may be a communication interface in the chip or the chip system. The communication interface is connected to the radio frequency transceiver component in the second apparatus, to implement information receiving and sending through the radio frequency transceiver component.

According to a fifth aspect, a computer-readable storage medium is provided. The computer-readable storage medium stores a computer program or instructions. When the computer program or the instructions are executed by a processor, the method according to any one of the first aspect and the second aspect or any possible design of the first aspect and the second aspect is implemented.

According to a sixth aspect, a computer program product storing instructions is provided. When the instructions are run by a processor, the method according to any one of the first aspect and the second aspect or any possible design of the first aspect and the second aspect is implemented.

According to a seventh aspect, a communication apparatus is provided. The communication apparatus includes a processor, and may further include a storage medium. The storage medium stores instructions. When the instructions are executed by the processor, the method according to any one of the first aspect and the second aspect or any possible design of the first aspect and the second aspect is implemented. The communication apparatus may be a chip system. The chip system may include a chip, or may include a chip and another discrete component.

According to an eighth aspect, a communication system is provided. The communication system includes the apparatus (for example, the first apparatus) according to the third aspect and the apparatus (for example, the second apparatus) according to the fourth aspect.

According to a ninth aspect, this application further provides a chip, including a processor. The processor is coupled to a memory, and is configured to read and execute program instructions stored in the memory, so that the chip implements the method according to the first aspect or any one of the possible designs of the first aspect, or implements the method according to the second aspect or any one of the possible designs of the second aspect.

For each aspect of the third aspect to the ninth aspect and technical effect that may be achieved by each aspect, refer to the description of technical effect that may be achieved in the first aspect or the possible solutions of the first aspect, or the second aspect or the possible solutions of the second aspect. Details are not described herein again.

BRIEF DESCRIPTION OF DRAWINGS

FIG. 1 is a diagram of a WLAN network architecture according to an embodiment of this application;
FIG. 2 is a diagram of a format of a PPDU according to an embodiment of this application;
FIG. 3 is a diagram of a format of a PPDU according to an embodiment of this application;
FIG. 4 is a diagram of a format of a PPDU according to an embodiment of this application;
FIG. 5 is a flowchart of a communication method according to an embodiment of this application;
FIG. 6 is a diagram of a structure of a communication apparatus according to an embodiment of this application;
FIG. 7 is a diagram of a structure of a communication apparatus according to an embodiment of this application;
FIG. 8 is a diagram of a structure of a communication apparatus according to an embodiment of this application; and

FIG. 9 is a diagram of a structure of a communication apparatus according to an embodiment of this application.

<u>DESCRIPTION OF EMBODIMENTS</u>

The following further describes this application in detail with reference to accompanying drawings.

Embodiments of this application provide a communication method and apparatus, to provide a solution for determining transmission duration of a PPDU. The method and the apparatus in this application are based on a same technical concept. Because problem-resolving principles of the method and the apparatus are similar, mutual reference may be made between implementations of the apparatus and the method, and repeated parts are not described again.

In the description of this application, words such as "first" and "second" are merely used for distinguishing between descriptions, and cannot be understood as an indication or implication of relative importance, or cannot be understood as an indication of implication of an order.

In the description of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

To describe the technical solutions in embodiments of this application more clearly, the following describes a communication method and apparatus provided in embodiments of this application in detail with reference to the accompanying drawings.

Embodiments of this application may be applicable to a WLAN scenario, and for example, may be applicable to the Institute of Electrical and Electronics Engineers (Institute of Electrical and Electronics Engineers, IEEE) 802.11 system standard. For example, embodiments of this application may be applicable to a standard below 7 GHz: the 802.11a/b/g standard, the 802.11n standard, the 802.11ac standard, the 802.11ax standard, or a next generation of the 802.11ax standard, for example, the 802.11be standard; or may be applicable to a high-frequency standard at 45 GHz or above: 802.11ad and 802.11ay standards.

Alternatively, embodiments of this application are applicable to a wireless local area network system like an internet of things (internet of things, IoT) network or a vehicle-to-everything (Vehicle to X, V2X) network. Certainly, embodiments of this application may be further applied to another possible communication system, for example, an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN develops from the 802.11a/g standard, and goes through 802.11n, 802.11ac, 802.11ax, and 802.11be that is currently being discussed. 802.11n can also be referred to as high throughput (high throughput, HT), 802.11ac can also be referred to as very high throughput (very high throughput, VHT), 802.11ax can also be referred to as high efficiency (high efficiency, HE) or Wi-Fi 6, and 802.11be can also be referred to as extremely high throughput (extremely high throughput, EHT) or Wi-Fi 7. Standards before HT, such as 802.11a/b/g, may be collectively referred to as non-high throughput (Non-HT). The 802.11ad standard may also be referred to as directional multi-gigabit (directional multi-gigabit, DMG), and the 802.11ay standard may also be referred to as enhanced directional multi-gigabit (enhanced directional multi-gigabit, EDMG).

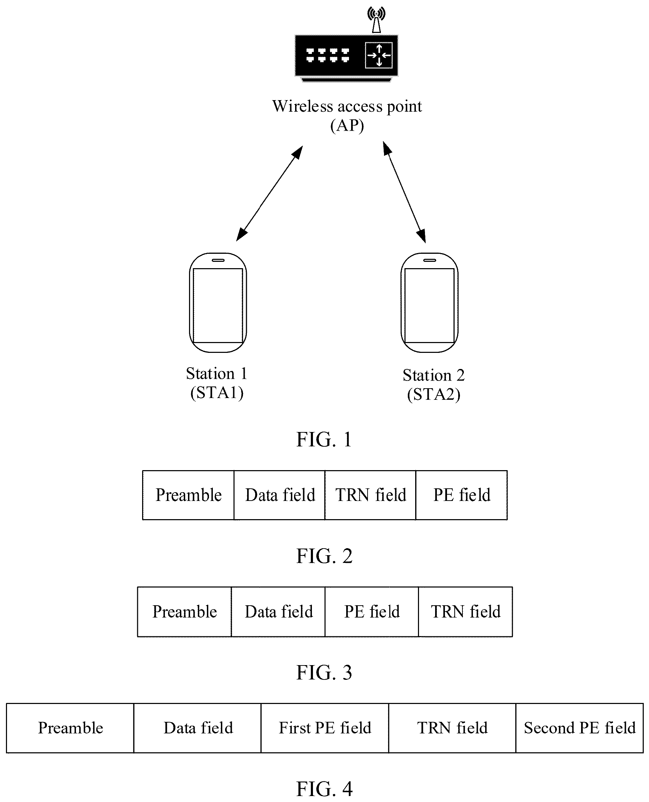

FIG. 1 is a diagram of a network architecture of a WLAN to which an embodiment of this application is applicable. In FIG. 1, an example in which the WLAN includes one AP and two STAs is used. An STA associated with the AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or less APs and STAs.

The access point may be an access point through which a terminal device (for example, a mobile phone) accesses a wired (or wireless) network, and is mainly deployed at home, in a building, and in a campus, with a typical coverage radius ranging from dozens of meters to hundreds of meters. Certainly, the access point may alternatively be deployed outdoors. The access point is equivalent to a bridge that connects the wired network and the wireless network. The access point is mainly used to connect various wireless network clients together and then connect the wireless network to an ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of WLAN standards of the 802.11 family, such as 802.11ax, 802.11ac, 802.11ad, 802.11ay, 802.11n, 802.11g, 802.11b, 802.11a, and a next generation of 802.11be.

The access point in embodiments of this application may be a DMG AP or an EDMG AP, or may be an access point applicable to a future-generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, or a computer that supports a Wi-Fi communication function. Optionally, the station may support the 802.11be standard. Alternatively, the station may support the plurality of WLAN standards of the 802.11 family, such as 802.11ax, 802.11ac, 802.11n, 802.11g, 802.11b, 802.11a, and the next generation of 802.11be.

The station in embodiments of this application may be a DMG STA or an EDMG STA, or may be an STA applicable to a future-generation Wi-Fi standard.

For example, the access point and the station each may be a device used in an internet of vehicles, an internet of things node, a sensor, or the like in an internet of things, a smart camera, a smart remote control, and a smart water or electricity meter in a smart home, a sensor in a smart city, or the like.

The AP and the STA in embodiments of this application may be an AP and an STA that are applicable to the IEEE 802.11 system standard. The AP is an apparatus that is deployed in a wireless communication network and that provides a wireless communication function for an STA associated with the AP. The AP may be used as a center of the communication system, and is usually a network-side product that supports MAC and PHY in the 802.11 system standard, for example, may be a communication device like a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) of the 802.11 system standard, for example, a mobile phone or a notebook computer.

In a communication process between two apparatuses, for example, a first apparatus and a second apparatus, if the first apparatus needs to establish a connection with the second apparatus, the first apparatus first needs to be capable of receiving a signal sent by the second apparatus, and the second apparatus also needs to be capable of receiving a signal sent by the first apparatus to the second apparatus. This is easy to implement in low-frequency (for example, sub-7 GHz and below 7 GHz) communication, because the first apparatus and the second apparatus may directly send signals in an omnidirectional manner at a low frequency. For example, the second apparatus sends a beacon frame in the omnidirectional manner, and the first apparatus receives the beacon frame in the omnidirectional manner; or the second apparatus sends a frame in the omnidirectional manner, and the first apparatus receives the frame in the omnidirectional manner. However, in high-frequency (for example, a frequency of 45 GHz or higher) communication, because a signal attenuation degree becomes extremely large compared with that at a low frequency, if the first apparatus and the second apparatus still perform receiving in the omnidirectional manner, a communication distance becomes extremely small, which does not meet an actual communication requirement. Therefore, in high-frequency communication, when the first apparatus and the second apparatus need to communicate with each other, beamforming training needs to be performed, that is, a proper sending direction or receiving direction needs to be found, so that at least one end of the first apparatus and the second apparatus can be directional (directional sending or directional receiving). In comparison with the omnidirectional manner, a directional beam has a longer transmission distance, and can meet an actual transmission distance requirement.

To meet a requirement of performing beamforming training between the two apparatuses, in an optional implementation, a PPDU transmitted between the two apparatuses may include a training (Training, TRN) field, and the TRN field may be used to train an antenna weight vector of a transmit end or a receive end in the two apparatuses. For example, training is performed on a direction of a transmit beam of the transmit end or a direction of a receive beam of the receive end, to help the transmit end and the receive end complete directional transmission, and improve communication quality. The training field may also be referred to as a training subfield (training subfield), and is a structure or a sequence repeated on a tail of a PPDU in high-frequency communication. K training subfields form one group, each group of training subfields includes six Golay complementary pairs, and K is an integer greater than or equal to 1.

In addition, when a radio frame is transmitted between the two apparatuses, to provide more processing time for the receive end, the PPDU transmitted between the two apparatuses may further include at least one packet extension (packet extension, PE) field.

The following describes a format of the PPDU in embodiments of this application with reference to the accompanying drawings.

The PPDU in embodiments of this application includes a preamble, a data field, a TRN field, and at least one PE field.

When the PPDU includes one PE field, in a format of the PPDU shown in FIG. 2, the PPDU sequentially includes the preamble, the data field, the TRN field, and the PE field. Alternatively, the PE field may be located after the data field and before the TRN field. As shown in FIG. 3, the PPDU sequentially includes the preamble, the data field, the PE field, and the TRN field.

When the PPDU includes at least two PE fields, in the PPDU, the data field is located after the preamble, the TRN field is located after the data field, a part of the at least two PE fields is located between the data field and the TRN field, and the other part of PE fields is located after the TRN field.

For example, the PPDU includes two PE fields (a first PE field and a second PE field). The format of the PPDU may be shown in FIG. 4. The PPDU sequentially includes the preamble, the data field, the first PE field, the TRN field, and the second PE field.

In a possible implementation, the PE field may be included in the TRN field, and the PE field is used as a part of the TRN field. For example, the PE field may be located at a start part of the TRN field, or the PE field may be located at an end part of the TRN field.

Based on the format of the PPDU described above, an embodiment of this application provides a communication method, to transmit the PPDU between a first apparatus and a second apparatus. In embodiments of this application, the PPDU may be transmitted between the first apparatus and the second apparatus in an orthogonal frequency division multiplexing (orthogonal frequency division multiplexing, OFDM) technology manner. The first apparatus may be the AP or the STA shown in FIG. 1, or the first apparatus may be a chip disposed in the AP or the STA. Similarly, the second apparatus may be the AP or the STA shown in FIG. 1, or the second apparatus may be a chip disposed in the AP or the STA.

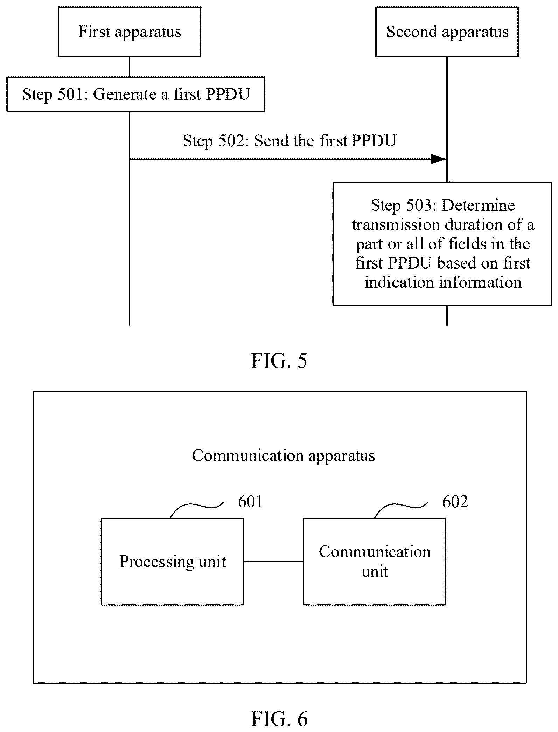

As shown in FIG. 5, a communication method provided in an embodiment of this application may specifically include the following steps.

Step 501: A first apparatus generates a first PPDU.

For a format of the PPDU generated by the first apparatus, refer to the foregoing description. Details are not described herein again.

In an optional implementation, the first PPDU further includes first indication information, and the first indication information represents transmission duration of a part or all of fields in the first PPDU. For example, the first indication information reflects transmission duration respectively corresponding to a data field, a PE field, and a TRN field in the first PPDU, and/or the first indication information reflects total transmission duration of the first PPDU.

Step 502: The first apparatus sends the first PPDU to a second apparatus.

In an optional implementation, the first apparatus sends the first PPDU to the second apparatus on a target transmission resource, where a frequency of the target transmission resource is greater than a first threshold.

It should be noted that this embodiment of this application may be applied to a high-frequency communication scenario. In this case, the first apparatus sends the first PPDU to the second apparatus on a high-frequency transmission resource. For example, the high-frequency communication scenario may be a communication scenario of 45 GHz or higher, and the first threshold may be 45 GHz.

Step 503: The second apparatus determines the transmission duration of the part or all of fields in the first PPDU based on the first indication information.

After receiving the first PPDU, the second apparatus may determine, based on the first indication information carried in the first PPDU, transmission duration corresponding to each field in the first PPDU and/or total transmission duration corresponding to all fields in the first PPDU. For example, the second apparatus determines, based on the first indication information, the transmission duration respectively corresponding to the data field, the PE field, and the TRN field in the first PPDU; and the second apparatus determines the total transmission duration of the first PPDU based on the first indication information.

In addition, when receiving the first PPDU, the second apparatus may receive the data field in the first PPDU symbol by symbol. Therefore, the second apparatus may further determine, based on the first indication information, a quantity of OFDM symbols included in the data field.

In step 501, the first indication information in the first PPDU generated by the first apparatus may have a plurality of different indication manners. In each indication manner, the first indication information includes different content. Correspondingly, when the first indication information includes different content, a manner in which the second apparatus determines the transmission duration of the part or all of fields in the first PPDU and/or a manner in which the second apparatus determines the quantity of OFDM symbols included in the data field are/is also different.

In this embodiment of this application, the first indication information may be carried in a preamble in the first PPDU.

Optionally, the preamble in the first PPDU may include a first preamble and a second preamble. The first preamble may also be referred to as a legacy preamble, and the first preamble may include but is not limited to at least one of the following content: a signaling field, a short training field (STF), and a long training field (LTF). The signaling field may carry the first indication information. The signaling field may be a legacy signaling field (L-SIG, where L represents legacy), a common signaling field, or a signaling field based on a standard. The second preamble may also be referred to as an additional preamble or a next-generation preamble (NG-preamble).

In this embodiment of this application, the first apparatus may indicate the transmission duration of the part or all of fields in the first PPDU by adding length information to the first indication information.

The length information may be first length information, or the length information may be second length information.

The first length information indicates a length that is of a physical layer service data unit (physical layer service data unit, PSDU) and that is considered by a conventional STA or AP. For example, the conventional STA or AP may be an STA or an AP in a version earlier than the new-version WLAN standard discussed in this application (for example, an STA or an AP in the 802.11a standard, where the 802.11a standard is merely an example of "conventional" in embodiments of this application. A standard other than the 802.11a standard may also be understood as a conventional standard relative to the standard discussed in this application. This is not specifically limited in embodiments of this application.). A length determined based on the first length information is not a length of the PSDU field in the first PPDU in the new-version WLAN standard discussed in this application. Therefore, the length that is of the PSDU and that is indicated by the first length information may be referred to as a "virtual PSDU length".

Optionally, the first length information in this embodiment of this application represents a first length, and the first length includes at least lengths of the data field, the TRN field, and the PE field in the first PPDU. Alternatively, the first length information represents total transmission duration including at least the data field, the TRN field, and the PE field.

The second length information indicates a length of the PSDU field in the PPDU in the new-version WLAN standard discussed in this application. Optionally, the second length information represents the length of the PSDU in the first PPDU, or the second length information represents transmission duration of the PSDU in the first PPDU. In some optional implementations, the length of the PSDU in the first PPDU may represent the transmission duration of the data field in the first PPDU.

The following separately describes indication manners of the first indication information.

1. The first indication information includes the first length information.

The first length information indicates a length that is of the PSDU field and that is considered by the legacy STA or the AP, or may be understood as transmission duration corresponding to a field that is in the first PPDU and that is located after the first preamble. The first length information does not indicate the length of the PSDU field in the first PPDU. For example, the first length represented by the first length information may include lengths of the second preamble, the data field, the TRN field, and the PE field. The length of the second preamble may be a preset length (for example, the length of the second preamble may be carried in the first preamble). After receiving the first PPDU, the second apparatus needs to determine the transmission duration of each field in the first PPDU based on the first length information. Therefore, in addition to the first length information, the first indication information further needs to include parameters that correspond to a part of fields and that represent transmission duration. In the following description, a parameter representing the transmission duration of the TRN field is referred to as a first parameter, a parameter representing the transmission duration of the PE field is referred to as a second parameter, and a parameter representing the transmission duration of the data field is referred to as a third parameter.

In a possible implementation, the first indication information includes at least two of the first parameter, the second parameter, and the third parameter, and the second apparatus determines, based on the parameters included in the first indication information, transmission duration of a field corresponding to another parameter. The following separately describes different cases.

Case 1: The first indication information further includes the first parameter and the second parameter.

The first parameter represents the transmission duration of the TRN field. The first parameter may be the transmission duration of the TRN field, or the first parameter may be a related parameter that can represent the transmission duration of the TRN field.

For example, the related parameter that can represent the transmission duration of the TRN field may be a quantity of TRN units. The TRN field may include one or more TRN units, and the first parameter may be the quantity of TRN units included in the TRN field. Because transmission duration of one TRN unit is fixed, the transmission duration of the TRN field may be determined based on the quantity of TRN units and the transmission duration corresponding to the TRN unit.

Alternatively, the related parameter that can represent the transmission duration of the TRN field may be N, where N is a positive integer, and N represents a multiple of a preset time unit. In this embodiment of this application, a time unit may be preset, and a length of one time unit is preset. The transmission duration of the TRN field may be determined based on the length of one time unit and a value of N.

The second parameter represents the transmission duration of the PE field. The second parameter may be the transmission duration of the PE field, or the second parameter may be a related parameter that can represent the transmission duration of the PE field.

For example, the related parameter that can represent the transmission duration of the PE field may be M, where M is a positive integer, and M represents a multiple of a preset time unit. In this embodiment of this application, a time unit may be preset, and a length of one time unit is preset. The transmission duration of the PE field may be determined based on the length of one time unit and a value of M.

It should be noted that a length of the preset time unit corresponding to the first parameter may be the same as or different from a length of the preset time unit corresponding to the second parameter.

Alternatively, the second parameter that can represent the related parameter of the transmission duration of the PE field may be disambiguation indication information.

The disambiguation indication information indicates a quantity of OFDM symbols included in the PE field.

The following describes in detail a meaning represented by the disambiguation indication information.

According to the foregoing description, the first length information in the first indication information indicates the length that is of the PSDU field and that is considered by the legacy STA or the AP, or may be understood as the transmission duration corresponding to the field that is in the first PPDU and that is located after the first preamble. The first length information carries a quantity of octets (one octet is one byte, and one byte includes eight bits). When a rate is 6 Mbit/s, each code element of 4 μs carries 24 bits. A service field and a tail field are further considered. In this case, duration corresponding to the first length information is:

$$\left\lceil \frac{(\text{LENGTH}+3)*8}{24} \right\rceil \times 4 = \left\lceil \frac{\text{LENGTH}+3}{4} \right\rceil \times 4 \quad (\text{Formula 1})$$

Herein, LENGTH + 3 indicates that the service field and/or the tail field are/is considered, and $\lceil \ \rceil$ represents a rounding-up operation. Because a quantity of code elements that need to be occupied by the quantity of octets corresponding to the first length information is calculated according to $\frac{\text{LENGTH}+3}{4}$, the rounding-up operation needs to be performed.

It can be learned from the duration corresponding to the first length information that the duration corresponding to the first length information is a multiple of 4. However, when the first length represented by the first length information includes the lengths of the second preamble, the data field, the TRN field, and the PE field, a sum of total transmission duration of the second preamble, the data field, the TRN field, and the PE field is not necessarily a multiple of 4. Therefore, there is a deviation value gap between the duration represented by the first length information and the total transmission duration of the second preamble, the data field, the TRN field, and the PE field. When a sum of the transmission duration of the PE field and the deviation value gap is greater than or equal to $T_{\text{SYM}}$, a possible ambiguity is that one OFDM symbol entirely includes the PE field. If one OFDM symbol is occupied, a value of the disambiguation indication information is defined as 1, if two OFDM symbols are occupied, the value of the disambiguation indication information is defined as 2, and the like. When the sum of the transmission duration of the PE field and the deviation value gap is less than $T_{\text{SYM}}$, the value of the disambiguation indication information is defined as 0. Therefore, a quantity of OFDM symbols occupied by both the duration of the PE field and the deviation value gap may be indicated based on the disambiguation indication information.

Based on the first indication information in this case, after receiving the first PPDU, the second apparatus may determine the transmission duration of the part or all of fields in the first PPDU in the following manners.

The format of the PPDU shown in FIG. 2 is used as an example. The first PPDU received by the second apparatus includes the first length information, the first parameter, and the second parameter.

The second apparatus may determine, based on the first parameter, the transmission duration corresponding to the TRN field.

If the second parameter is the transmission duration corresponding to the PE field, the second apparatus may directly determine, based on the second parameter, the transmission duration corresponding to the PE field. If the duration parameter corresponding to the PE field is M, the second apparatus may determine the transmission duration of the PE field based on the length of one time unit and the value of M. If the second parameter is the disambiguation indication information, the second apparatus may determine, based on the disambiguation indication information, the transmission duration corresponding to the data field, and determine, based on the determined transmission duration corresponding to the data field and the first length information, the transmission duration corresponding to the PE field.

(1): The second parameter is the disambiguation indication information.

The following describes a manner in which the second apparatus determines a quantity of OFDM symbols occupied by the data field, the transmission duration corresponding to the data field, the transmission duration corresponding to the PE field, and the total transmission duration of the first PPDU.

1A: The second apparatus determines the quantity $N_{\text{SYM}}$ of OFDM symbols occupied by the data field.

Because the duration corresponding to the first length information indicates the duration corresponding to the field that is in the first PPDU and that is located after the first preamble, the duration corresponding to the first length information may include the total transmission duration of the second preamble, the data field, the TRN field, and the PE field, or the duration corresponding to the first length information may include the total transmission duration of the second preamble, the data field, the TRN field, the PE field, and the deviation value gap.

The second apparatus may determine, based on the first parameter in the first indication information, the transmission duration $T_{TRN}$ corresponding to the TRN field. Transmission duration $T_{NG-PREAMBLE}$ corresponding to the second preamble is pre-agreed transmission duration, or $T_{NG-PREAMBLE}$ may be carried in the first preamble, and the second apparatus parses out the transmission duration $T_{NG-PREAMBLE}$ corresponding to the second preamble from the first preamble. In this case, the second apparatus may determine, according to the following Formula 2, the quantity $N_{SYM}$ of OFDM symbols occupied by the data field:

$$N_{SYM} = \left\lfloor \frac{\left\lceil \frac{LENGTH+3}{3} \right\rceil \times 4 - T_{NG-PREAMBLE} - T_{TRN}}{T_{SYM}} \right\rfloor - N_{PE-Disambiguation} \quad \text{(Formula 2)}$$

Herein, $\left\lceil \frac{LENGTH+3}{3} \right\rceil \times 4$ is the duration corresponding to the first length information, and $N_{PE-Disambiguation}$ is the value corresponding to the disambiguation indication information. $T_{SYM}$ represents transmission duration corresponding to one OFDM symbol occupied by the data field, or represents transmission duration corresponding to one OFDM symbol occupied by the data field and a guard interval. A value of $T_{SYM}$ is preset, or a value of $T_{SYM}$ is pre-agreed on by the first apparatus and the second apparatus, and $\lfloor \rfloor$ represents a rounding down operation.

In a high-frequency communication scenario, because the first length information is no longer read by the conventional STA or AP, $\left\lceil \frac{LENGTH+3}{3} \right\rceil \times 4$ may be replaced with f(LENGTH), where f(LENGTH) represents a correspondence between a length and time, and the correspondence may be preset randomly. For example, f(LENGTH)=LENGTH*T1, where T1 is preset duration, or duration pre-agreed on by the first apparatus and the second apparatus. Based on this, the second apparatus may determine, according to the following Formula 3, the quantity $N_{SYM}$ of OFDM symbols occupied by the data field:

$$N_{SYM} = \left\lfloor \frac{f(LENGTH) - T_{NG-PREAMBLE} - T_{TRN}}{T_{SYM}} \right\rfloor - N_{PE-Disambiguation} \quad \text{(Formula 3)}$$

In addition, because the transmission duration $T_{NG-PREAMBLE}$ corresponding to the second preamble is the preset duration, the transmission duration $T_{NG-PREAMBLE}$ corresponding to the second preamble may be considered when f(LENGTH) is set, and $T_{NG-PREAMBLE}$ is included in the correspondence that is between the length and the time and that is represented by f(LENGTH). In this case, the second apparatus may determine, according to the following Formula 4, the quantity $N_{SYM}$ of OFDM symbols occupied by the data field:

$$N_{SYM} = \left\lfloor \frac{f(LENGTH) - T_{TRN}}{T_{SYM}} \right\rfloor - N_{PE-Disambiguation} \quad \text{(Formula 4)}$$

In this embodiment of this application, after determining, based on Formula 2, Formula 3, or Formula 4, the quantity $N_{SYM}$ of OFDM symbols occupied by the data field, the second apparatus may determine the transmission duration corresponding to the data field.

1B: The second apparatus determines the transmission duration $T_{DATA}$ corresponding to the data field.

After determining the quantity $N_{SYM}$ of OFDM symbols occupied by the data field, the second apparatus may determine, according to the following formula, the transmission duration $T_{DATA}$ corresponding to the data field:

$$T_{DATA} = N_{SYM} * T_{SYM},$$

where

$N_{SYM}$ represents the quantity of OFDM symbols occupied by the data field, and $T_{SYM}$ represents the transmission duration corresponding to one OFDM symbol occupied by the data field, or represents the transmission duration corresponding to one OFDM symbol occupied by the data field and the guard interval. A value of $T_{SYM}$ is preset, or a value of $T_{SYM}$ is pre-agreed on by the first apparatus and the second apparatus.

1C: The second apparatus determines the transmission duration $T_{PE}$ corresponding to the PE field.

Because the first length information is the duration corresponding to the field that is in the first PPDU and that is located after the first preamble, after the transmission duration $T_{DATA}$ corresponding to the data field and the transmission duration $T_{TRN}$ corresponding to the TRN field are determined based on the foregoing content, the transmission duration $T_{NG-PREAMBLE}$ corresponding to the second preamble is the pre-agreed duration, or $T_{NG-PREAMBLE}$ may be carried in the first preamble. Based on this, the second apparatus may determine, according to the following Formula 5, the transmission duration $T_{PE}$ corresponding to the PE field:

$$T_{PE} = \left\lfloor \frac{\left\lceil \frac{LENGTH+3}{3} \right\rceil \times 4 - T_{NG-PREAMBLE} - T_{TRN} - T_{DATA}}{T_{PE-Granularity}} \right\rfloor \times T_{PE-Granularity} \quad \text{(Formula 5)}$$

Herein, $\left\lceil \frac{LENGTH+3}{3} \right\rceil \times 4$ is the duration corresponding to the first length information; $T_{PE\text{-}Granularity}$ represents an adjustment step corresponding to the transmission duration of the PE field, where the transmission duration of the PE field is an integer multiple of the adjustment step, for example, a value of $T_{PE\text{-}Granularity}$ may be 4 microseconds, and the transmission duration of the PE field may be 4 microseconds, 8 microseconds, 12 microseconds, or the like; and $\llcorner \lrcorner$ represents a rounding down operation.

In the high-frequency communication scenario, because the first length information is no longer read by the conventional STA or AP, $\left\lceil \frac{LENGTH+3}{3} \right\rceil \times 4$ may be replaced with f(LENGTH), where f(LENGTH) represents the correspondence between the length and the time, and the correspondence may be preset randomly. For example, f(LENGTH)=LENGTH*T2, where T2 is preset duration, or duration pre-agreed on by the first apparatus and the second apparatus. Based on this, the second apparatus may determine, according to the following Formula 6, the transmission duration $T_{PE}$ corresponding to the PE field:

$$T_{PE} = \left\lfloor \frac{f(LENGTH) - T_{NG-PREAMBLE} - T_{TRN} - T_{DATA}}{T_{PE-Granularity}} \right\rfloor \times T_{PE-Granularity} \quad \text{(Formula 6)}$$

In addition, because the transmission duration $T_{NG\text{-}PREAMBLE}$ corresponding to the second preamble is the preset duration, the transmission duration $T_{NG\text{-}PREAMBLE}$ corresponding to the second preamble may be considered when f(LENGTH) is set, and $T_{NG\text{-}PREAMBLE}$ is included in the correspondence that is between the length and the time and that is represented by f(LENGTH). In this case, the second apparatus may determine, according to the following Formula 7, the transmission duration $T_{PE}$ corresponding to the PE field:

$$T_{PE} = \left\lfloor \frac{f(LENGTH) - T_{TRN} - T_{DATA}}{T_{PE-Granularity}} \right\rfloor \times T_{PE-Granularity} \quad \text{(Formula 7)}$$

1D: Determine the total transmission duration of the first PPDU.

After determining the transmission duration $T_{DATA}$ corresponding to the data field and the transmission duration $T_{PE}$ corresponding to the PE field, the second apparatus may determine the total transmission duration of the first PPDU based on the transmission duration corresponding to each field.

$$TXTIME = T_{L-PREAMBLE} + T_{NG-PREAMBLE} + T_{DATA} + T_{PE} + T_{TRN} \quad \text{(Formula 8)}$$

Herein, TXTIME represents the total transmission duration of the first PPDU; $T_{L\text{-}PREAMBLE}$ represents the transmission duration corresponding to the first preamble (the transmission duration corresponding to the first preamble is the preset duration, or the transmission duration corresponding to the first preamble is carried in the first preamble); and $T_{NG\text{-}PREAMBLE}$ represents the transmission duration corresponding to the second preamble, $T_{DATA}$ represents the transmission duration corresponding to the data field, $T_{PE}$ represents the transmission duration corresponding to the PE field, and $T_{TRN}$ represents the transmission duration corresponding to the TRN field.

2. The second parameter is the transmission duration corresponding to the PE field, or the second parameter is M.

The following describes a manner in which the second apparatus determines the transmission duration corresponding to the PE field, the transmission duration corresponding to the data field, the quantity of OFDM symbols occupied by the data field, and the total transmission duration of the first PPDU.

2A: The second apparatus determines the transmission duration $T_{PE}$ corresponding to the PE field.

If a duration parameter corresponding to the PE field is the transmission duration corresponding to the PE field, the second apparatus may directly obtain the transmission duration corresponding to the PE field. If the duration parameter corresponding to the PE field is M, the second apparatus may determine, based on a preset length of one time unit and a value of M, the transmission duration corresponding to the PE field.

2B: The second apparatus determines the quantity of OFDM symbols occupied by the data field.

Because the duration corresponding to the first length information indicates the duration corresponding to the field located after the first preamble in the first PPDU, the duration corresponding to the first length information may include the duration of the second preamble, the data field, the TRN field, the PE field, and the deviation value gap. The second apparatus may determine, based on the first parameter in the first indication information, the transmission duration $T_{TRN}$ corresponding to the TRN field. The transmission duration $T_{NG-PREAMBLE}$ corresponding to the second preamble is pre-agreed duration, or $T_{NG-PREAMBLE}$ may be carried in the first preamble, and the second apparatus parses out the transmission duration $T_{NG-PREAMBLE}$ corresponding to the second preamble from the first preamble. The second apparatus may obtain, in the foregoing manner, the transmission duration corresponding to the PE field.

In this case, the second apparatus may determine, according to the following Formula 9, the quantity $N_{SYM}$ of OFDM symbols occupied by the data field:

$$N_{SYM} = \left\lfloor \frac{\left\lceil \frac{LENGTH+3}{3} \right\rceil \times 4 - T_{NG-PREAMBLE} - T_{TRN} - T_{PE}}{T_{SYM}} \right\rfloor \quad \text{(Formula 9)}$$

Herein, $\left\lceil \frac{LENGTH+3}{3} \right\rceil \times 4$ is the duration corresponding to the first length information, and $T_{SYM}$ represents the transmission duration corresponding to one OFDM symbol occupied by the data field, or represents the transmission duration corresponding to one OFDM symbol occupied by the data field and the guard interval. The value of $T_{SYM}$ is preset, or the value of $T_{SYM}$ is pre-agreed on by the first apparatus and the second apparatus.

In the high-frequency communication scenario, because the first length information is no longer read by the conventional STA or AP, $\left\lceil \frac{LENGTH+3}{3} \right\rceil \times 4$ may be replaced with f(LENGTH), where f(LENGTH) represents the correspondence between the length and the time, and the correspondence may be preset randomly. For example, f(LENGTH)=LENGTH*T1, where T1 is the preset duration, or the duration pre-agreed on by the first apparatus and the second apparatus. Based on this, the second apparatus may determine, according to the following Formula 10, the quantity $N_{SYM}$ of OFDM symbols occupied by the data field:

$$N_{SYM} = \left\lfloor \frac{f(LENGTH) - T_{NG-PREAMBLE} - T_{TRN} - T_{PE}}{T_{SYM}} \right\rfloor \quad \text{(Formula 10)}$$

In addition, because the transmission duration $T_{NG-PREAMBLE}$ corresponding to the second preamble is the preset duration, the transmission duration $T_{NG-PREAMBLE}$ corresponding to the second preamble may be considered when f(LENGTH) is set, and $T_{NG-PREAMBLE}$ is included in the correspondence that is between the length and the time and that is represented by f(LENGTH). In this case, the second apparatus may determine, according to the following Formula 11, the quantity $N_{SYM}$ of OFDM symbols occupied by the data field:

$$N_{SYM} = \left\lfloor \frac{f(LENGTH) - T_{TRN} - T_{PE}}{T_{SYM}} \right\rfloor \quad \text{(Formula 11)}$$

In this embodiment of this application, after determining, based on Formula 9, Formula 10, or Formula 11, the quantity $N_{SYM}$ of OFDM symbols occupied by the data field, the second apparatus may determine the transmission duration corresponding to the data field.

2C: The second apparatus determines the transmission duration $T_{DATA}$ corresponding to the data field.

After determining the quantity $N_{SYM}$ of OFDM symbols occupied by the data field, the second apparatus may determine, according to the following formula, the transmission duration $T_{DATA}$ corresponding to the data field:

$$T_{DATA} = N_{SYM} * T_{SYM},$$

where

$N_{SYM}$ represents the quantity of OFDM symbols occupied by the data field, and $T_{SYM}$ represents the transmission duration corresponding to one OFDM symbol occupied by the data field, or represents the transmission duration corresponding to one OFDM symbol occupied by the data field and the guard interval. A value of $T_{SYM}$ is preset, or a value of $T_{SYM}$ is pre-agreed on by the first apparatus and the second apparatus.

2D: The second apparatus determines the total transmission duration of the first PPDU.

For a manner in which the second apparatus determines the total transmission duration of the first PPDU, refer to

**EP 4 657 789 A1**

the foregoing descriptions. Details are not described herein again.

Case 2: The first indication information further includes a second parameter and a third parameter.

The third parameter represents the transmission duration of the data field. The third parameter may be the transmission duration of the data field. Alternatively, the third parameter is a quantity of OFDM symbols of the data field and/or transmission duration corresponding to each OFDM symbol.

For example, the transmission duration corresponding to each OFDM symbol may be transmission duration corresponding to one OFDM symbol in the data field, or may be transmission duration corresponding to one OFDM symbol and a guard interval. When the guard interval is considered, the transmission duration corresponding to each OFDM symbol is not fixed. For example, the transmission duration corresponding to each OFDM symbol may be 12.8 microseconds, 14.4 microseconds, 16 microseconds, or the like. Therefore, in a possible implementation, the first apparatus needs to indicate, by using the first indication information, the transmission duration corresponding to each OFDM symbol.

When the third parameter is the transmission duration of the data field, the second apparatus may determine, based on the transmission duration of the data field and the transmission duration $T_{SYM}$ corresponding to one OFDM symbol, the quantity $N_{SYM}$ of OFDM symbols occupied by the data field.

When the third parameter is the quantity $N_{SYM}$ of OFDM symbols occupied by the data field, the second apparatus may determine, based on the quantity of OFDM symbols occupied by the data field and the transmission duration $T_{SYM}$ corresponding to one OFDM symbol, the transmission duration $T_{DATA}$ corresponding to the data field. $T_{SYM}$ may be carried in third indication information, or a value of $T_{SYM}$ is preset, or a value of $T_{SYM}$ is pre-agreed on by the first apparatus and the second apparatus.

For a duration parameter corresponding to the PE field, refer to the foregoing descriptions. Details are not described herein again.

Based on the first indication information in this case, after receiving the first PPDU, the second apparatus may determine the transmission duration of the part or all of fields in the first PPDU in the following manners.

The format of the PPDU shown in FIG. 2 is used as an example. The first PPDU received by the second apparatus includes the first length information, the second parameter, and the third parameter.

The second apparatus may determine, based on the third parameter, the transmission duration corresponding to the data field.

If the second parameter is the transmission duration corresponding to the PE field, the second apparatus may directly determine, based on the second parameter, the transmission duration corresponding to the PE field. If the second parameter is M, the second apparatus may determine the transmission duration of the PE field based on a length of one time unit and a value of M. If the second parameter is the disambiguation indication information, the second apparatus may determine, based on the disambiguation indication information, the transmission duration corresponding to the TRN field, and determine, based on the determined transmission duration corresponding to the TRN field and the first length information, the transmission duration corresponding to the PE field.

(1): The second parameter is the disambiguation indication information.

The following describes a manner in which the second apparatus determines the transmission duration corresponding to the TRN field, the transmission duration corresponding to the PE field, and the total transmission duration of the first PPDU.

1A: The second apparatus determines the transmission duration $T_{TRN}$ corresponding to the TRN field.

Herein, $T_{TRN} = N_{TRN} * T_{TRN\text{-}unit}$, where $N_{TRN}$ represents a quantity of TRN units included in the TRN field, and $T_{TRN\text{-}unit}$ represents transmission duration corresponding to one TRN unit; and $T_{TRN\text{-}unit} = aBRPTRNBlock * T_C$, where aBRPTRNBlock represents a quantity of bits of a TRN block of a beam refinement protocol, and Tc represents one piece of chip time.

Therefore, when the second apparatus determines the transmission duration $T_{TRN}$ corresponding to the TRN field, because a value of $T_{TRN\text{-}unit}$ is fixed, the second apparatus needs to determine the $N_{TRN}$, and may determine, based on the $N_{TRN}$, the transmission duration $T_{TRN}$ corresponding to the TRN field.

Because the duration corresponding to the first length information indicates the duration corresponding to the field located after the first preamble in the first PPDU, the duration corresponding to the first length information may include the duration of the second preamble, the data field, the TRN field, the PE field, and the deviation value gap. The second apparatus may determine, based on the third parameter in the first indication information, the transmission duration $T_{TRN}$ corresponding to the data field. The transmission duration $T_{NG\text{-}PREAMBLE}$ corresponding to the second preamble is pre-agreed duration, or $T_{NG\text{-}PREAMBLE}$ may be carried in the first preamble, and the second apparatus parses out the transmission duration $T_{NG\text{-}PREAMBLE}$ corresponding to the second preamble from the first preamble. In this case, the second apparatus may determine, according to the following Formula 12, the quantity $N_{TRN}$ of TRN units included in the TRN field:

15

$$N_{TRN} = \left\lfloor \frac{\left\lceil \frac{LENGTH+3}{3} \right\rceil \times 4 - T_{NG-PREAMBLE} - T_{DATA}}{T_{TRN-unit}} \right\rfloor - N_{PE-Disambiguation} \quad \text{(Formula 12)}$$

Herein, $\left\lceil \frac{LENGTH+3}{3} \right\rceil \times 4$ is the duration corresponding to the first length information, $N_{PE-Disambiguation}$ is a value corresponding to the disambiguation indication information, and a value of $T_{TRN-unit}$ is preset, or a value of $T_{TRN-unit}$ is pre-agreed on by the first apparatus and the second apparatus.

In the high-frequency communication scenario, because the first length information is no longer read by the conventional STA or AP, $\left\lceil \frac{LENGTH+3}{3} \right\rceil \times 4$ may be replaced with g(LENGTH), where g(LENGTH) represents a correspondence between a length and time, and the correspondence may be preset randomly. For example, g(LENGTH) =LENGTH*T3, where T3 is preset duration, or duration pre-agreed on by the first apparatus and the second apparatus. Based on this, the second apparatus may determine, according to the following Formula 13, the quantity $N_{TRN}$ of TRN units included in the TRN field:

$$N_{TRN} = \left\lfloor \frac{g(LENGTH) - T_{NG-PREAMBLE} - T_{DATA}}{T_{TRN-unit}} \right\rfloor - N_{PE-Disambiguation} \quad \text{(Formula 13)}$$

In addition, because the transmission duration $T_{NG-PREAMBLE}$ corresponding to the second preamble is the preset duration, the transmission duration $T_{NG-PREAMBLE}$ corresponding to the second preamble may be considered when g(LENGTH) is set, and $T_{NG-PREAMBLE}$ is included in the correspondence that is between the length and the time and that is represented by g(LENGTH). In this case, the second apparatus may determine, according to the following Formula 14, the quantity $N_{TRN}$ of TRN units included in the TRN field:

$$N_{TRN} = \left\lfloor \frac{g(LENGTH) - T_{DATA}}{T_{TRN-unit}} \right\rfloor - N_{PE-Disambiguation} \quad \text{(Formula 14)}$$

Based on the foregoing manner, the second apparatus may determine the quantity of TRN units included in the TRN field. The second apparatus may determine, based on the quantity $N_{TRN}$ of TRN units included in the TRN field and the transmission duration corresponding to one TRN unit, the transmission duration $T_{TRN}$ corresponding to the TRN field.

1B: The second apparatus determines the transmission duration $T_{PE}$ corresponding to the PE field.

For a manner of determining the transmission duration corresponding to the PE field, refer to the foregoing description (the second apparatus determines the transmission duration $T_{PE}$ corresponding to the PE field in Case 1). Details are not described herein again.

1C: Determine the total transmission duration of the first PPDU.

For a manner of determining the total transmission duration of the first PPDU, refer to the foregoing description (the second apparatus determines the total transmission duration of the first PPDU in Case 1). Details are not described herein again.

(2): The second parameter is the transmission duration corresponding to the PE field, or the second parameter is M.

The following describes a manner in which the second apparatus determines the transmission duration corresponding to the PE field, the transmission duration corresponding to the TRN field, and the total transmission duration of the first PPDU.

2A: The second apparatus determines the transmission duration $T_{PE}$ corresponding to the PE field.

If a duration parameter corresponding to the PE field is the transmission duration corresponding to the PE field, the second apparatus may directly obtain the transmission duration corresponding to the PE field. If the duration parameter corresponding to the PE field is M, the second apparatus may determine, based on a preset length of one time unit and a value of M, the transmission duration corresponding to the PE field.

2B: The second apparatus determines the transmission duration $T_{TRN}$ corresponding to the TRN field.

Herein, $T_{TRN}=N_{TRN}*T_{TRN-unit}$, where $N_{TRN}$ represents a quantity of TRN units included in the TRN field, and $T_{TRN-unit}$ represents transmission duration corresponding to one TRN unit; and $T_{TRN-unit}=aBRPTRNBlock*T_C$, where aBRPTRNBlock represents a quantity of bits of a TRN block of a beam refinement protocol, and Tc represents one piece of chip time.

Therefore, when the second apparatus determines the transmission duration $T_{TRN}$ corresponding to the TRN field, because a value of $T_{TRN-unit}$ is fixed, the second apparatus needs to determine the $N_{TRN}$, and may determine, based on the $N_{TRN}$, the transmission duration $T_{TRN}$ corresponding to the TRN field.

Because the duration corresponding to the first length information indicates the duration corresponding to the field located after the first preamble in the first PPDU, the duration corresponding to the first length information may include the duration of the second preamble, the data field, the TRN field, the PE field, and the deviation value gap. The second apparatus may determine, based on the third parameter in the first indication information, the transmission duration $T_{TRN}$ corresponding to the data field. The transmission duration $T_{NG-PREAMBLE}$ corresponding to the second preamble is pre-agreed duration, or $T_{NG-PREAMBLE}$ may be carried in the first preamble, and the second apparatus parses out the transmission duration $T_{NG-PREAMBLE}$ corresponding to the second preamble from the first preamble. In addition, the second apparatus may determine, based on the foregoing content, the transmission duration $T_{PE}$ corresponding to the PE field. In this case, the second apparatus may determine, according to the following Formula 15, the quantity $N_{TRN}$ of TRN units included in the TRN field:

$$N_{TRN} = \left\lfloor \frac{\left\lceil \frac{LENGTH+3}{3} \right\rceil \times 4 - T_{NG-PREAMBLE} - T_{DATA} - T_{PE}}{T_{TRN-unit}} \right\rfloor \quad \text{(Formula 15)}$$

Herein, $\left\lceil \frac{LENGTH+3}{3} \right\rceil \times 4$ is the duration corresponding to the first length information, and the value of $T_{TRN-unit}$ is preset, or the value of $T_{TRN-unit}$ is pre-agreed on by the first apparatus and the second apparatus.

In the high-frequency communication scenario, because the first length information is no longer read by the conventional STA or AP, $\left\lceil \frac{LENGTH+3}{3} \right\rceil \times 4$ may be replaced with g(LENGTH), where g(LENGTH) represents the correspondence between the length and the time, and the correspondence may be preset randomly. For example, g(LENGTH)=LENGTH*T4, where T4 is preset duration, or duration pre-agreed on by the first apparatus and the second apparatus. Based on this, the second apparatus may determine, according to the following Formula 16, the quantity $N_{TRN}$ of TRN units included in the TRN field:

$$N_{TRN} = \left\lfloor \frac{g(LENGTH) - T_{NG-PREAMBLE} - T_{DATA} - T_{PE}}{T_{TRN-unit}} \right\rfloor \quad \text{(Formula 16)}$$

In addition, because the transmission duration $T_{NG-PREAMBLE}$ corresponding to the second preamble is the preset duration, the transmission duration $T_{NG-PREAMBLE}$ corresponding to the second preamble may be considered when g(LENGTH) is set, and $T_{NG-PREAMBLE}$ is included in the correspondence that is between the length and the time and that is represented by g(LENGTH). In this case, the second apparatus may determine, according to the following Formula 17, the quantity $N_{TRN}$ of TRN units included in the TRN field:

$$N_{TRN} = \left\lfloor \frac{g(LENGTH) - T_{DATA} - T_{PE}}{T_{TRN-unit}} \right\rfloor \quad \text{(Formula 17)}$$

Based on the foregoing manner, the second apparatus may determine the quantity of TRN units included in the TRN field. The second apparatus may determine, based on the quantity $N_{TRN}$ of TRN units included in the TRN field and the transmission duration corresponding to one TRN unit, the transmission duration $T_{TRN}$ corresponding to the TRN field.

2C: The second apparatus determines the total transmission duration of the first PPDU.

For a manner in which the second apparatus determines the total transmission duration of the first PPDU, refer to the foregoing description (the second apparatus determines the total transmission duration of the first PPDU in Case 1). Details are not described herein again.

2. The first indication information includes the second length information.

The second length information represents second length information of an actual PSDU length.

Because the second length information may reflect transmission duration corresponding to the data field in the first PPDU, when the first indication information includes the second length information, the second apparatus may determine, based on the second length information, the transmission duration corresponding to the data field. In addition, the second apparatus further needs to determine transmission duration corresponding to the TRN field, transmission duration corresponding to the PE field, and a quantity of OFDM symbols occupied by the data field.

Optionally, in this embodiment of this application, after obtaining the second length information by using the first indication information, the second apparatus further needs to determine parameters that correspond to the TRN field and the PE field and that represent the transmission duration. In the following description, a parameter representing the transmission duration of the TRN field is referred to as a first parameter, a parameter representing the transmission duration of the PE field is referred to as a second parameter, and a parameter representing the transmission duration of the data field is referred to as a third parameter.

During implementation, the second apparatus respectively determines, based on the first parameter and the second parameter, the transmission duration corresponding to the TRN field and the transmission duration corresponding to the PE field.

In embodiments of this application, the second apparatus may obtain the first parameter and the second parameter in a plurality of different manners. The following separately describes the manners.

(1) The second apparatus determines the first parameter.

In embodiments of this application, the second apparatus may determine the first parameter in the following plurality of different manners.

Manner 1 of determining the first parameter: The first indication information includes the first parameter.

In this manner, the first indication information includes the first parameter. After receiving the first indication information, the second apparatus may obtain the first parameter from the first indication information.

Manner 2 of determining the first parameter: The first parameter is predefined.

In this manner, the first parameter may be agreed on in a protocol, and the first apparatus and the second apparatus may determine the first parameter according to the protocol.

Manner 3 of determining the first parameter: Second indication information of a second PPDU includes the first parameter.

The second PPDU is transmitted by the first apparatus to the second apparatus before the first PPDU is transmitted.

In this manner, the first parameter in the first PPDU is the same as the first parameter carried in the second PPDU.

Because the second PPDU is transmitted by the first apparatus to the second apparatus before the first PPDU is transmitted, the second PPDU includes the second indication information, and the second indication information may carry the first parameter. Therefore, the second apparatus may determine, based on the first parameter carried in the second indication information, the first parameter corresponding to the TRN field in the first PPDU.

(2) The second apparatus determines the second parameter.

In embodiments of this application, the second apparatus may determine the second parameter in the following plurality of different manners.

Manner 1 of determining the second parameter: The first indication information includes the second parameter.

In this manner, the first indication information includes the second parameter. After receiving the first indication information, the second apparatus may obtain the second parameter from the first indication information.

Manner 2 of determining the second parameter: The second parameter is predefined.

In this manner, the second parameter may be agreed on in a protocol, and the first apparatus and the second apparatus may determine the second parameter according to the protocol.

Manner 3 of determining the second parameter: The second indication information of the second PPDU includes the second parameter.

The second PPDU is transmitted by the first apparatus to the second apparatus before the first PPDU is transmitted.

In this manner, the first parameter in the first PPDU is the same as the first parameter carried in the second PPDU.

Because the second PPDU is transmitted by the first apparatus to the second apparatus before the first PPDU is transmitted, the second PPDU includes the second indication information, and the second indication information may carry the second parameter. Therefore, the second apparatus may determine, based on the second parameter carried in the second indication information, the second parameter corresponding to the PE field in the first PPDU.

It should be noted that, in embodiments of this application, the second apparatus may determine the first parameter in any one of the foregoing manners of determining the first parameter, and the second apparatus may determine the second parameter in any one of the foregoing manners of determining the second parameter. A manner of determining the first parameter may be the same as or different from a manner of determining the second parameter. For example, if the second apparatus determines the first parameter in Manner 1 of determining the first parameter, and determines the second parameter in Manner 1 of determining the second parameter, the first indication information in the first PPDU transmitted by the first apparatus to the second apparatus carries the first parameter and the second parameter. If the second apparatus determines the first parameter in Manner 1 of determining the first parameter, and determines the second parameter in Manner 2 of determining the second parameter, the first indication information in the first PPDU transmitted by the first apparatus to the second apparatus carries the first parameter, and the second apparatus determines the predefined second parameter. If the second apparatus determines the first parameter in Manner 1 of determining the first parameter, and determines the second parameter in Manner 3 of determining the second parameter, the first indication information in the first PPDU transmitted by the first apparatus to the second apparatus carries the first parameter, and the second apparatus determines, based on the second parameter carried in the second indication information in the previously transmitted second PPDU, the second parameter corresponding to the PE field in the first PPDU.

In this embodiment of this application, after obtaining the second length information, the first parameter, and the second parameter, the second apparatus separately determines the transmission duration corresponding to the data field, the quantity of OFDM symbols occupied by the data field, the transmission duration corresponding to the TRN field, and the transmission duration corresponding to the PE field.

(1): The second apparatus determines the transmission duration corresponding to the data field and the quantity of OFDM symbols occupied by the data field.

The second apparatus may determine, according to the following Formula 18, the quantity of OFDM symbols occupied by the data field:

$$N_{SYM} = \left\lceil \frac{N_{CW} \times L_{CW}}{N_{CBPS}} \right\rceil \quad (\text{Formula } 18)$$

Herein, $N_{CW}$ may be determined according to the following Formula 19:

$$N_{CW} = \left\lceil \frac{\text{Length} \times 8}{L_{CW} \times R} \right\rceil \quad (\text{Formula } 19)$$

Herein, the length is the value corresponding to the second length information, $L_{CW}$ represents a length of a codeword, and R represents an encoding rate. Therefore, $L_{CW} \times R$ represents valid payload data that can be carried in one codeword, and $N_{CW}$, determined according to Formula 19, represents a quantity of codewords required by the data field. Based on Formula 18, $N_{CW} \times L_{CW}$ represents a total codeword length of the data field, and $N_{CBPS}$ represents a quantity of bits corresponding to each OFDM symbol. Therefore, the quantity of OFDM symbols occupied by the data field may be obtained according to Formula 18.

In addition, when a multi-user PPDU is transmitted, a quantity of OFDM symbols occupied by a data field of each user needs to be determined. Therefore, $N_{CBPS}$ in Formula 18 needs to be replaced with $N_{SD} \cdot \sum_{i_{ss}=1}^{N_{SS\,i_{user}}} N_{BPSC\,i_{user}\,i_{ss}}$ (where $N_{SD}$ is a quantity of data subcarriers, $N_{SS\,i_{user}}$ is a quantity of streams, and $N_{BPSC\,i_{user}\,i_{ss}}$ is a quantity of bits corresponding to each subcarrier in an OFDM symbol) that is affected by a stream factor. In this case, the quantity of OFDM symbols occupied by the data field of each user may be determined according to the following Formula 20:

$$N_{SYM\,i_{user}} = \left\lceil \frac{N_{CW\,i_{user}} \times L_{CW\,i_{user}}}{N_{SD} \cdot \sum_{i_{ss}=1}^{N_{SS\,i_{user}}} N_{BPSC\,i_{user}\,i_{ss}}} \right\rceil \quad (\text{Formula } 20)$$

Herein, $N_{SYM\,i_{user}}$ is a quantity of OFDM symbols occupied by a data field of any user, $L_{CW\,i_{user}}$ represents the length of the codeword, and $N_{CW\,i_{user}}$ may be determined according to the following Formula 21:

$$N_{CW\,i_{user}} = \left\lceil \frac{\text{Length}_{i_{user}} \times 8}{L_{CW\,i_{user}} \times R_{i_{user}}} \right\rceil \quad (\text{Formula } 21)$$

Herein, $\text{Length}_{i_{user}}$ is a value corresponding to the second length information, and $R_{i_{user}}$ represents the encoding rate.

After determining the quantity $N_{SYM}$ of OFDM symbols occupied by the data field, the second apparatus may determine, based on transmission duration $T_{SYM}$ ($T_{SYM}$ may include duration corresponding to a guard interval GI) corresponding to one OFDM symbol occupied by the data field, the transmission duration $T_{DATA}$ corresponding to the data field.

(2): The second apparatus determines the transmission duration $T_{TRN}$ corresponding to the TRN field.

In implementation, the second apparatus may determine, based on the first parameter, the transmission duration $T_{TRN}$ corresponding to the TRN field.

For a specific manner in which the second apparatus determines, based on the first parameter, the transmission duration $T_{TRN}$ corresponding to the TRN field, refer to the foregoing description (for example, Case 1).

(3): The second apparatus determines the transmission duration $T_{PE}$ corresponding to the PE field.

In implementation, the second apparatus may determine, based on the second parameter, the transmission duration $T_{PE}$ corresponding to the PE field.

For a specific manner in which the second apparatus determines, based on the second parameter, the transmission duration $T_{PE}$ corresponding to the PE field, refer to the foregoing description (for example, Case 2).

(4): The second apparatus determines the total transmission duration of the first PPDU.

After separately determining the transmission duration corresponding to the data field, the transmission duration corresponding to the TRN field, and the transmission duration corresponding to the PE field in the first PPDU, the second apparatus determines the total transmission duration of the first PPDU.

For a manner in which the second apparatus determines the total transmission duration of the first PPDU, refer to the foregoing descriptions. Details are not described herein again.

3. The first indication information includes a first parameter, a second parameter, and a third parameter.

In this indication manner of the first indication information, the first apparatus directly adds, to the first indication information, the first parameter corresponding to the TRN field, the second parameter corresponding to the PE field, and the third parameter corresponding to the data field. After receiving the first PPDU, the second apparatus separately determines, based on the first indication information in the first PPDU, transmission duration corresponding to the data field, a quantity of OFDM symbols occupied by the data field, transmission duration corresponding to the TRN field, and transmission duration corresponding to the PE field.

For a specific manner in which the second apparatus determines, based on the third parameter, the transmission duration corresponding to the data field in the first PPDU and the quantity of OFDM symbols occupied by the data field, determines, based on the first parameter, the transmission duration corresponding to the TRN field in the first PPDU, and determines, based on the second parameter, the transmission duration corresponding to the PE field in the first PPDU, refer to the foregoing descriptions.

After separately determining the transmission duration corresponding to the data field, the transmission duration corresponding to the TRN field, and the transmission duration corresponding to the PE field in the first PPDU, the second apparatus determines the total transmission duration of the first PPDU.

For a manner in which the second apparatus determines the total transmission duration of the first PPDU, refer to the foregoing descriptions. Details are not described herein again.

4. The first indication information includes first duration, the first duration represents total transmission duration corresponding to a field after a field in which the first indication information is located in the first PPDU, and the total transmission duration includes at least duration corresponding to the data field and a part or all of fields after the data field.

The field in which the first indication information is located may be the first preamble.

In this indication manner of the first indication information, after receiving the first PPDU, the second apparatus may determine the total transmission duration of the first PPDU based on the first duration included in the first indication information in the first PPDU and the transmission duration corresponding to the first preamble in the first PPDU.

It should be noted that, in the foregoing description, when the second apparatus needs to determine the quantity of OFDM symbols occupied by the data field and the transmission duration corresponding to the data field, an example in which the second apparatus first determines the quantity of OFDM symbols occupied by the data field, and then determines, based on the determined quantity of OFDM symbols occupied by the data field, the transmission duration corresponding to the data field is used for description. In some possible implementations, the second apparatus may first determine the transmission duration corresponding to the data field, and then determine the quantity of OFDM symbols occupied by the data field. This is not limited in embodiments of this application.

PPDUs in embodiments of this application are classified into a PPDU in a high-frequency format and a PPDU in a low-frequency format. The PPDU in the high-frequency format is a PPDU sent through a high-frequency transmission resource. For example, a PPDU transmitted using a transmission resource whose frequency is greater than or equal to 45 GHz is a high-frequency PPDU. The PPDU in the low-frequency format is a PPDU sent using a low-frequency transmission resource. For example, a PPDU transmitted using a transmission resource whose frequency is less than 7 GHz is a low-frequency PPDU.

In an optional implementation, the second apparatus may determine the format of the received first PPDU in the following manner:

Determining manner 1: The second apparatus determines the format of the first PPDU based on a frequency of a transmission resource for transmitting the first PPDU by the first apparatus.

Determining manner 2: The second apparatus determines the format of the first PPDU based on third indication information included in the first PPDU transmitted by the first apparatus.

The preamble in the first PPDU includes the third indication information, and the third indication information represents the format of the first PPDU. For example, the third indication information may be carried in the first preamble. When the third indication information is "0", it indicates that the format of the first PPDU is the low-frequency format; and when the third indication information is "1", it indicates that the format of the first PPDU is the high-frequency format; or when the third indication information is "1", it indicates that the format of the first PPDU is the low-frequency format, and when the third indication information is "0", it indicates that the format of the first PPDU is the high-frequency format.

After determining the total transmission duration of the first PPDU, the transmission duration corresponding to the data field, the quantity of OFDM symbols occupied by the data field, the transmission duration corresponding to the TRN field, and the transmission duration corresponding to the PE field, the second apparatus accurately receives, based on the determined total transmission duration of the first PPDU, the determined transmission duration corresponding to the data field, the determined quantity of OFDM symbols occupied by the data field, the determined transmission duration corresponding to the TRN field, and the determined transmission duration corresponding to the PE field, each field in the first PPDU and data content carried in the data field.

Based on a same inventive concept as the method embodiments, an embodiment of this application provides a communication apparatus. A structure of the communication apparatus may be shown in FIG. 6, and the communication apparatus includes a processing unit 601 and a communication unit 602.

In an implementation, the communication apparatus may be specifically configured to implement the method performed by the first apparatus. The apparatus may be the first apparatus, or may be a chip or a chipset in the first apparatus, or a part that is of a chip and that is configured to perform a related method function. The processing unit 601 is configured to generate a first PPDU, where the first PPDU includes a data field, a TRN field, and at least one PE field. The TRN field is located after the data field, and the PE field is located between the data field and the TRN field, or the PE field is located after the TRN field. The first PPDU further includes first indication information, and the first indication information represents transmission duration of a part or all of fields in the first PPDU. The communication unit 602 is configured to send the first PPDU to a second apparatus.

Optionally, the first apparatus sends the first PPDU to the second apparatus on a target transmission resource, where a frequency of the target transmission resource is greater than a first threshold.

For example, the first indication information includes first length information, the first length information represents a first length, and the first length includes at least lengths of the data field, the TRN field, and the PE field; or the first length information represents total transmission duration including at least the data field, the TRN field, and the PE field.

For example, the first indication information further includes a first parameter corresponding to the TRN field and a second parameter corresponding to the PE field. The first parameter represents transmission duration of the TRN field, and the second parameter represents transmission duration of the PE field.

For example, the first indication information further includes a third parameter corresponding to the data field and a second parameter corresponding to the PE field. The third parameter represents transmission duration of the data field, and the second parameter represents transmission duration of the PE field.

For example, the first indication information includes second length information. The second length information represents a length of a PSDU in the first PPDU, or the second length information represents transmission duration of a PSDU in the first PPDU.

For example, the first parameter corresponding to the TRN field or the second parameter corresponding to the PE field may be configured in the following manner: being carried in the first indication information, or being predefined, or being carried in second indication information of a second PPDU. The second PPDU is transmitted by the first apparatus to the second apparatus before the first PPDU is transmitted, the first parameter represents transmission duration of the TRN field, and the second parameter represents transmission duration of the PE field.

For example, the first indication information includes a first parameter corresponding to the TRN field, a second parameter corresponding to the PE field, and a third parameter corresponding to the data field. The first parameter represents transmission duration of the TRN field, the second parameter represents transmission duration of the PE field, and the third parameter represents transmission duration of the data field. Alternatively, the first indication information includes first duration, the first duration represents total transmission duration corresponding to a field after a field in which the first indication information is located in the first PPDU, and the total transmission duration includes at least duration corresponding to the data field and a part or all of fields after the data field.

For example, the first parameter is the transmission duration of the TRN field; or the first parameter is a quantity of TRN units included in the TRN field and/or transmission duration of each TRN unit.

For example, the second parameter is the transmission duration of the PE field, or the second parameter is disambiguation indication information, or the second parameter is M, where M represents a multiple of transmission duration of a preset time unit.

For example, the third parameter is the transmission duration of the data field; or the third parameter is a quantity of OFDM symbols occupied by the data field and/or transmission duration corresponding to each OFDM symbol.

For example, the first PPDU further includes a preamble, the preamble includes a signaling field, and the signaling field carries the first indication information.

For example, the preamble includes third indication information, and the third indication information represents a format of the first PPDU.

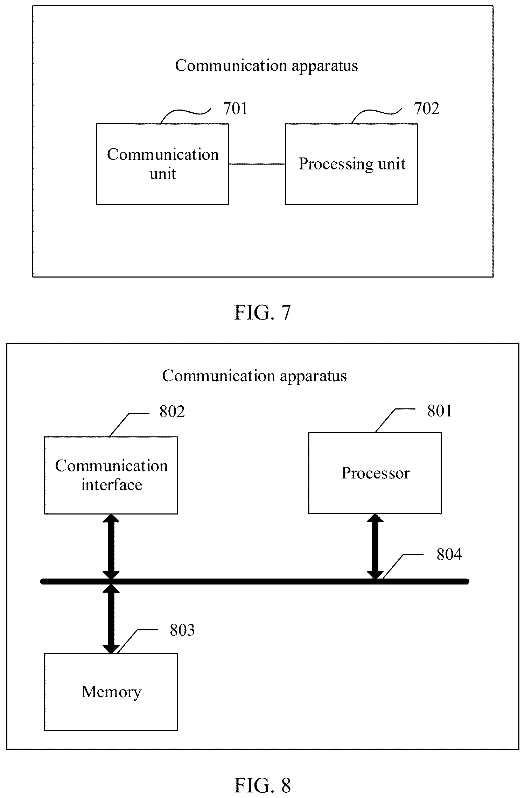

An embodiment of this application further provides a communication apparatus. A structure of the communication apparatus may be shown in FIG. 7, and the communication apparatus includes a communication unit 701 and a processing unit 702.

In an implementation, the communication apparatus may be specifically configured to implement the method performed by the first apparatus. The apparatus may be the first apparatus, or may be a chip or a chipset in the first apparatus, or a part that is of a chip and that is configured to perform a related method function. The communication unit 701 is configured to receive a first PPDU sent by a first apparatus, where the first PPDU includes a data field, a TRN field, and at least one PE field. The TRN field is located after the data field, and the PE field is located between the data field and the TRN field, or the PE field is located after the TRN field. The first PPDU further includes first indication information. The processing unit 702 is configured to determine transmission duration of a part or all of fields in the first PPDU based on the first indication information.

Optionally, the communication unit 701 may be configured to receive a first PPDU sent by the first apparatus on a target transmission resource, where a frequency of the target transmission resource is greater than a first threshold.

For example, the first indication information includes first length information, the first length information represents a first length, and the first length includes at least lengths of the data field, the TRN field, and the PE field; or the first length information represents total transmission duration including at least the data field, the TRN field, and the PE field.

For example, the first indication information further includes a first parameter corresponding to the TRN field and a second parameter corresponding to the PE field. The first parameter represents transmission duration of the TRN field, and the second parameter represents transmission duration of the PE field.

For example, the first indication information further includes a third parameter corresponding to the data field and a second parameter corresponding to the PE field. The third parameter represents transmission duration of the data field, and the second parameter represents transmission duration of the PE field.

For example, the first indication information includes second length information. The second length information represents a length of a PSDU in the first PPDU, or the second length information represents transmission duration of a PSDU in the first PPDU.

For example, the first parameter corresponding to the TRN field or the second parameter corresponding to the PE field may be configured in the following manner: being carried in the first indication information, or being predefined, or being carried in second indication information of a second PPDU. The second PPDU is transmitted by the first apparatus to the second apparatus before the first PPDU is transmitted, the first parameter represents transmission duration of the TRN field, and the second parameter represents transmission duration of the PE field.

For example, the first indication information includes a first parameter corresponding to the TRN field, a second parameter corresponding to the PE field, and a third parameter corresponding to the data field. The first parameter represents transmission duration of the TRN field, the second parameter represents transmission duration of the PE field, and the third parameter represents transmission duration of the data field. Alternatively, the first indication information includes first duration, the first duration represents total transmission duration corresponding to a field after a field in which the first indication information is located in the first PPDU, and the total transmission duration includes at least duration corresponding to the data field and a part or all of fields after the data field.

For example, the first parameter is the transmission duration of the TRN field; or the first parameter is a quantity of TRN units included in the TRN field and/or transmission duration of each TRN unit.

For example, the second parameter is the transmission duration of the PE field, or the second parameter is disambiguation indication information, or the second parameter is M, where M represents a multiple of transmission duration of a preset time unit.

For example, the third parameter is the transmission duration of the data field; or the third parameter is a quantity of OFDM symbols occupied by the data field and/or transmission duration corresponding to each OFDM symbol.

For example, the first PPDU further includes a preamble, the preamble includes a signaling field, and the signaling field carries the first indication information.

For example, the preamble includes third indication information, and the third indication information represents a format of the first PPDU.

Optionally, the processing unit 702 may be further configured to determine a format of the first PPDU based on a frequency of a transmission resource for transmitting the first PPDU by the first apparatus.

In embodiments of this application, division into the units is an example, is merely logical function division, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of software functional module. It may be understood that for functions or implementations of the units in embodiments of this application, further refer to related descriptions in the method embodiments.

In a possible manner, the communication apparatus may be shown in FIG. 8. The apparatus may be a communication device or a chip in the communication device. The communication device may be the first apparatus in the foregoing embodiments. The apparatus includes a processor 801 and a communication interface 802, and may further include a memory 803. The processing unit 601 may be the processor 801. The communication unit 602 may be a communication interface 802.

The processor 801 may be a CPU, a digital processing unit, or the like. The communication interface 802 may be a transceiver, an interface circuit like a transceiver circuit, a transceiver chip, or the like. The apparatus further includes a memory 803, configured to store a program executed by the processor 801. The memory 803 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 803 is any other medium that can be configured to carry or store expected program code in a form of instructions or a data structure and that can be accessed by a computer, but is not limited thereto.

The processor 801 is configured to execute the program code stored in the memory 803, and is specifically configured to perform an action of the processing unit 601. Details are not described herein again in this application. The communication interface 802 is specifically configured to perform an action of the communication unit 602. Details are not described herein again in this application.

A specific connection medium between the communication interface 802, the processor 801, and the memory 803 is not limited in embodiments of this application. In embodiments of this application, the memory 803, the processor 801, and the communication interface 802 are connected via a bus 804 in FIG. 8. The bus is represented by using a bold line in FIG. 8. A connection manner between other components is merely an example for description, and is not limited thereto. The bus may be classified as an address bus, a data bus, a control bus, and the like. For ease of representation, the bus is represented by using only one bold line in FIG. 8, but this does not mean that there is only one bus or only one type of bus.

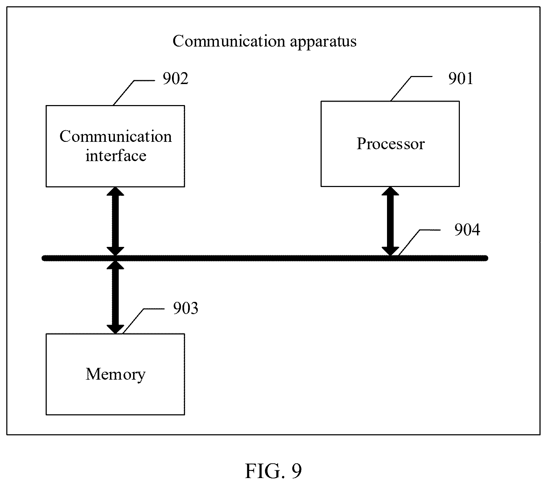

In a possible manner, the communication apparatus may be shown in FIG. 9. The apparatus may be a communication device or a chip in the communication device. The communication device may be the second apparatus in the foregoing embodiments. The apparatus includes a processor 901 and a communication interface 902, and may further include a memory 903. The processing unit 702 may be the processor 901. The communication unit 701 may be a communication interface 902.

The processor 901 may be a CPU, a digital processing unit, or the like. The communication interface 902 may be a transceiver, an interface circuit like a transceiver circuit, a transceiver chip, or the like. The apparatus further includes a memory 903, configured to store a program executed by the processor 901. The memory 903 may be a nonvolatile memory like an HDD or an SSD, or may be a volatile memory like a RAM. The memory 903 is any other medium that can be configured to carry or store expected program code in a form of instructions or a data structure and that can be accessed by a computer, but is not limited thereto.

The processor 901 is configured to execute the program code stored in the memory 903, and is specifically configured to perform an action of the processing unit 702. Details are not described herein again in this application. The communication interface 902 is specifically configured to perform an action of the communication unit 701. Details are not described herein again in this application.

A specific connection medium between the communication interface 902, the processor 901, and the memory 903 is not limited in embodiments of this application. In embodiments of this application, the memory 903, the processor 901, and the communication interface 902 are connected via a bus 904 in FIG. 9. The bus is represented by using a bold line in FIG. 9. A connection manner between other components is merely an example for description, and is not limited thereto. The bus may be classified as an address bus, a data bus, a control bus, and the like. For ease of representation, the bus is represented by using only one bold line in FIG. 9, but this does not mean that there is only one bus or only one type of bus.

An embodiment of this application further provides a computer-readable storage medium, configured to store computer software instructions that need to be executed by the processor. The computer software instructions include a program that needs to be executed by the processor.

An embodiment of this application further provides a computer program product, including a computer program that needs to be executed by the processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the protection scope of this application. This application is intended to cover these modifications and variations of this application provided that they fall within the scope of the claims of this application and equivalent technologies thereof.

**Claims**

1. A communication method, wherein the method comprises:

   generating, by a first apparatus, a first physical layer protocol data unit PPDU, wherein the first PPDU comprises a data field, a training TRN field, and at least one packet extension PE field; the TRN field is located after the data field, and the PE field is located between the data field and the TRN field, or the PE field is located after the TRN field; and the first PPDU further comprises first indication information, and the first indication information represents transmission duration of a part or all of fields in the first PPDU; and
   sending, by the first apparatus, the first PPDU to a second apparatus.

2. The method according to claim 1, wherein sending, by the first apparatus, the first PPDU to the second apparatus comprises:
   sending, by the first apparatus, the first PPDU to the second apparatus on a target transmission resource, wherein a frequency of the target transmission resource is greater than a first threshold.

3. The method according to claim 1, wherein the first indication information comprises first length information; and the first length information represents a first length, and the first length comprises at least lengths of the data field, the TRN field, and the PE field; or the first length information represents total transmission duration comprising at least the data field, the TRN field, and the PE field.

4. The method according to claim 3, wherein the first indication information further comprises a first parameter corresponding to the TRN field and a second parameter corresponding to the PE field; and the first parameter represents transmission duration of the TRN field, and the second parameter represents transmission duration of the PE field.

5. The method according to claim 3, wherein the first indication information further comprises a third parameter corresponding to the data field and a second parameter corresponding to the PE field; and the third parameter represents transmission duration of the data field, and the second parameter represents transmission duration of the PE field.

6. The method according to claim 1, wherein the first indication information comprises second length information; and the second length information represents a length of a physical layer service data unit PSDU in the first PPDU, or the second length information represents transmission duration of a PSDU in the first PPDU.

7. The method according to claim 6, wherein a first parameter corresponding to the TRN field or a second parameter corresponding to the PE field may be configured in the following manner:

> being carried in the first indication information, or being predefined, or being carried in second indication information of a second PPDU, wherein
> the second PPDU is transmitted by the first apparatus to the second apparatus before the first PPDU is transmitted, the first parameter represents transmission duration of the TRN field, and the second parameter represents transmission duration of the PE field.

8. The method according to claim 1, wherein the first indication information comprises a first parameter corresponding to the TRN field, a second parameter corresponding to the PE field, and a third parameter corresponding to the data field; and the first parameter represents transmission duration of the TRN field, the second parameter represents transmission duration of the PE field, and the third parameter represents transmission duration of the data field; or the first indication information comprises first duration, the first duration represents total transmission duration corresponding to a field after a field in which the first indication information is located in the first PPDU, and the total transmission duration comprises at least duration corresponding to the data field and a part or all of fields after the data field.

9. The method according to claim 4, 7, or 8, wherein the first parameter is the transmission duration of the TRN field; or the first parameter is a quantity of TRN units comprised in the TRN field and/or transmission duration of each TRN unit.

10. The method according to claim 4, 5, 7, or 8, wherein the second parameter is the transmission duration of the PE field, or the second parameter is disambiguation indication information, or the second parameter is M, and M represents a multiple of transmission duration of a preset time unit.

11. The method according to claim 5 or 8, wherein the third parameter is the transmission duration of the data field, or the third parameter is a quantity of OFDM symbols occupied by the data field and/or transmission duration corresponding to each OFDM symbol.

12. The method according to any one of claims 1 to 11, wherein the first PPDU further comprises a preamble, the preamble comprises a signaling field, and the signaling field carries the first indication information.

13. The method according to claim 12, wherein the preamble comprises third indication information, and the third indication information represents a format of the first PPDU.

14. A communication method, wherein the method comprises:

> receiving, by a second apparatus, a first physical layer protocol data unit PPDU sent by a first apparatus, wherein the first PPDU comprises a data field, a training TRN field, and at least one packet extension PE field; the TRN field is located after the data field, and the PE field is located between the data field and the TRN field, or the PE field is located after the TRN field; and the first PPDU further comprises first indication information; and
> determining, by the second apparatus, transmission duration of a part or all of fields in the first PPDU based on the first indication information.

15. The method according to claim 14, wherein receiving, by the second apparatus, the first PPDU sent by the first apparatus comprises:
receiving, by the second apparatus, the first PPDU sent by the first apparatus on a target transmission resource, wherein a frequency of the target transmission resource is greater than a first threshold.

16. The method according to claim 14, wherein the first indication information comprises first length information; and the first length information represents a first length, and the first length comprises at least lengths of the data field, the TRN field, and the PE field; or the first length information represents total transmission duration comprising at least the data field, the TRN field, and the PE field.

17. The method according to claim 16, wherein the first indication information further comprises a first parameter corresponding to the TRN field and a second parameter corresponding to the PE field; and the first parameter represents transmission duration of the TRN field, and the second parameter represents transmission duration of the PE field.

18. The method according to claim 16, wherein the first indication information further comprises a third parameter corresponding to the data field and a second parameter corresponding to the PE field; and
the third parameter represents transmission duration of the data field, and the second parameter represents transmission duration of the PE field.

19. The method according to claim 14, wherein the first indication information comprises second length information; and
the second length information represents a length of a physical layer service data unit PSDU in the first PPDU, or the second length information represents transmission duration of a PSDU in the first PPDU.

20. The method according to claim 19, wherein a first parameter corresponding to the TRN field or a second parameter corresponding to the PE field may be configured in the following manner:

being carried in the first indication information, or being predefined, or being carried in second indication information of a second PPDU, wherein
the second PPDU is transmitted by the first apparatus to the second apparatus before the first PPDU is transmitted, the first parameter represents transmission duration of the TRN field, and the second parameter represents transmission duration of the PE field.

21. The method according to claim 14, wherein the first indication information comprises a first parameter corresponding to the TRN field, a second parameter corresponding to the PE field, and a third parameter corresponding to the data field; and the first parameter represents transmission duration of the TRN field, the second parameter represents transmission duration of the PE field, and the third parameter represents transmission duration of the data field; or the first indication information comprises first duration, the first duration represents total transmission duration corresponding to a field after a field in which the first indication information is located in the first PPDU, and the total transmission duration comprises at least duration corresponding to the data field and a part or all of fields after the data field.

22. The method according to claim 17, 20, or 21, wherein the first parameter is the transmission duration of the TRN field; or the first parameter is a quantity of TRN units comprised in the TRN field and/or transmission duration of each TRN unit.

23. The method according to claim 17, 18, 20, or 21, wherein the second parameter is the transmission duration of the PE field, or the second parameter is disambiguation indication information, or the second parameter is M, and M represents a multiple of transmission duration of a preset time unit.

24. The method according to claim 18 or 21, wherein the third parameter is the transmission duration of the data field, or the third parameter is a quantity of OFDM symbols occupied by the data field and/or transmission duration corresponding to each OFDM symbol.

25. The method according to any one of claims 14 to 24, wherein the first PPDU further comprises a preamble, the preamble comprises a signaling field, and the signaling field carries the first indication information.

26. The method according to claim 25, wherein the preamble comprises third indication information, and the third indication information represents a format of the first PPDU.

27. The method according to any one of claims 14 to 25, wherein the method further comprises:
determining, by the second apparatus, a format of the first PPDU based on a frequency of a transmission resource for transmitting the first PPDU by the first apparatus.

28. A communication apparatus, configured to implement the method according to any one of claims 1 to 13, or implement the method according to any one of claims 14 to 27.

29. A communication apparatus, wherein the apparatus comprises a processor and a storage medium, the storage medium stores instructions, and when the instructions are run by the processor, the method according to any one of claims 1 to 13 is implemented, or the method according to any one of claims 14 to 27 is implemented.

30. A computer-readable storage medium, wherein the computer-readable storage medium comprises instructions, and when the instructions are run by a processor, the method according to any one of claims 1 to 13 is implemented, or the method according to any one of claims 14 to 27 is implemented.

Wireless access point
(AP)

Station 1
(STA1)

Station 2
(STA2)

FIG. 1

| Preamble | Data field | TRN field | PE field |
|----------|------------|-----------|----------|

FIG. 2

| Preamble | Data field | PE field | TRN field |
|----------|------------|----------|-----------|

FIG. 3

| Preamble | Data field | First PE field | TRN field | Second PE field |
|----------|------------|----------------|-----------|-----------------|

FIG. 4

First apparatus

Second apparatus

Step 501: Generate a first PPDU

Step 502: Send the first PPDU

Step 503: Determine transmission duration of a part or all of fields in the first PPDU based on first indication information

FIG. 5

Communication apparatus

601

Processing unit

602

Communication unit

FIG. 6

Communication apparatus

701

Communication
unit

702

Processing unit

FIG. 7

Communication apparatus

802

Communication
interface

801

Processor

804

803

Memory

FIG. 8

Communication apparatus

Communication
interface — 902

Processor — 901

— 904

Memory — 903

FIG. 9

## INTERNATIONAL SEARCH REPORT

| International application No. |
| --- |
| **PCT/CN2024/076870** |

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT, ENTXTC, ENTXT, VEN: 协议数据单元, 训练, 序列, 包扩展, 字段, 长度, 时长, 符号, 个数, 指示, PPDU, TRN, training, PE, packet extension, Length, OFDM, indicat+

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110740457 A (HUAWEI TECHNOLOGIES CO., LTD.) 31 January 2020 (2020-01-31) description, paragraphs 108-171 | 1-30 |
| Y | CN 111698067 A (HUAWEI TECHNOLOGIES CO., LTD.) 22 September 2020 (2020-09-22) description, paragraphs 93-100 | 1-30 |
| Y | WO 2016191991 A1 (HUAWEI TECHNOLOGIES CO., LTD.) 08 December 2016 (2016-12-08) description, pages 2-5 and 14-20 | 1-30 |
| A | US 2018014327 A1 (NEUROMEKA) 11 January 2018 (2018-01-11) entire document | 1-30 |
| A | WO 2016140402 A1 (LG ELECTRONICS INC.) 09 September 2016 (2016-09-09) entire document | 1-30 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 April 2024** | **15 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/076870**

| Patent document cited in search report | | | Publication date (day/month/year) | Patent family member(s) | | | Publication date (day/month/year) |
|---|---|---|---|---|---|---|---|
| CN | 110740457 | A | 31 January 2020 | WO | 2020015378 | A1 | 23 January 2020 |
| CN | 111698067 | A | 22 September 2020 | WO | 2020187031 | A1 | 24 September 2020 |
| | | | | EP | 3937408 | A1 | 12 January 2022 |
| | | | | CN | 116232555 | A | 06 June 2023 |
| WO | 2016191991 | A1 | 08 December 2016 | | None | | |
| US | 2018014327 | A1 | 11 January 2018 | US | 2019335503 | A1 | 31 October 2019 |
| WO | 2016140402 | A1 | 09 September 2016 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310154340